Europäisches Patentamt

European Patent Office

Office européen des brevets

(19)

(11) **EP 1 365 254 A1**

(12) **EUROPEAN PATENT APPLICATION**

(43) Date of publication:
**26.11.2003 Bulletin 2003/48**

(51) Int Cl.⁷: **G01S 1/04**, G01S 5/14

(21) Application number: **03019141.5**

(22) Date of filing: **19.02.2001**

| | |
|---|---|
| (84) Designated Contracting States:<br>**DE ES FI FR GB IT SE**<br><br>(30) Priority: **10.08.2000 US 635617**<br><br>(62) Document number(s) of the earlier application(s) in accordance with Art. 76 EPC:<br>**01301419.6 / 1 184 674**<br><br>(71) Applicant: **LUCENT TECHNOLOGIES INC.**<br>**Murray Hill, New Jersey 07974-0636 (US)**<br><br>(72) Inventors:<br>• **Chen, Phil Fu-Wei**<br>**Denville, New Jersey 07834 (US)** | • **Zidel, Andrew Todd**<br>**Westfield, New Jersey 07090 (US)**<br><br>(74) Representative:<br>**Watts, Christopher Malcolm Kelway, Dr. et al**<br>**Lucent Technologies (UK) Ltd,**<br>**5 Mornington Road**<br>**Woodford Green Essex, IG8 0TU (GB)**<br><br><u>Remarks:</u><br>This application was filed on 25 - 08 - 2003 as a divisional application to the application mentioned under INID code 62. |

(54) **A method of aligning predicted navigation information**

(57) Disclosed is a method for enhancing data wipeoff using predicted future navigation data and improved timing alignment. Proper time alignment of predicted future navigation data to the navigation data to be wipeoff enhances data wipeoff by reducing or eliminating the amount of incomplete wipeoff. In one embodiment, the future navigation data is predicted for a particular satellite and a first or starting bit in the predicted future navigation data is time aligned to a corresponding reference bit in the navigation data to be wiped off. Specifically, the transmission time at the satellite of the reference bit is determined and added to a propagation delay associated with the satellite to obtain an action time for applying the predicted navigation data at a GPS receiver or WAG client to GPS signals transmitted by the satellite.

**Description**

This invention relates to methods of enhancing data wipeoff.

Geographical location, or geolocation, involves determining the position of a mobile wireless device. Prior art geolocation systems use satellite-based navigation equipment to provide accurate, three-dimensional position information. One well-known satellite-based navigation system is the Global Positioning System (GPS).

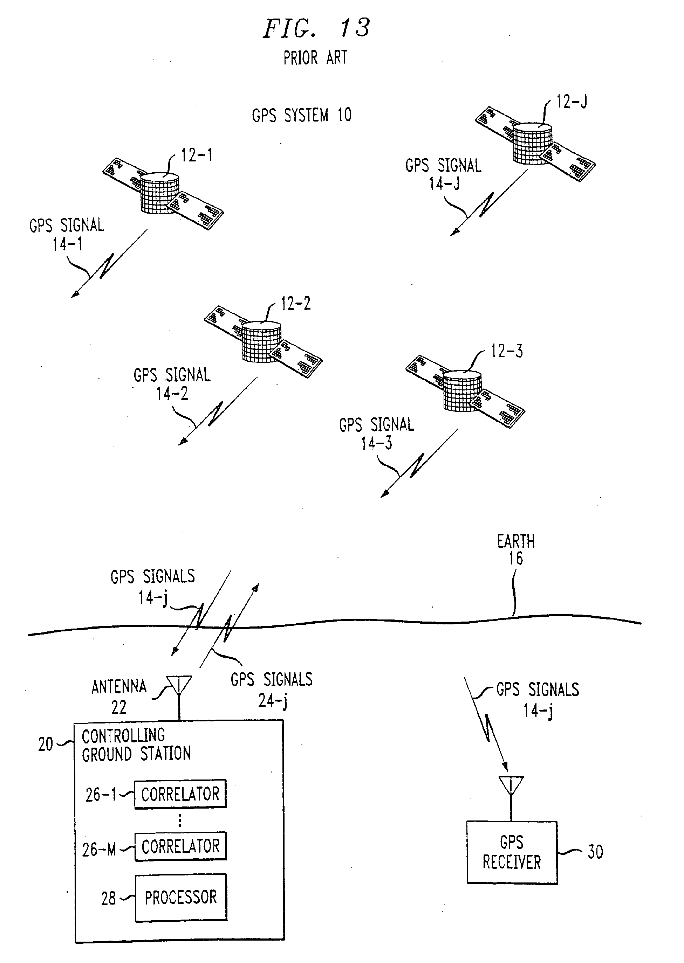

FIG. 13 depicts a GPS system 10 used in accordance with the prior art. GPS system 10 comprises a plurality of satellites 12-$j$, at least one controlling ground station 20, and at least one GPS receiver 30, where $j$ = 1,2,..., J. Each satellite 12-$j$ orbits the Earth 16 at a known speed $v_j$ and is a known distance from the other satellites 12-$j$. Each satellite 12-$j$ transmits a GPS signal 14-$j$, which is a carrier signal at a known frequency $f$ that is bipolar phase shift key (BPSK) modulated using a unique pseudo-random noise (PN-$j$) code and navigation data CND-$j$) associated with that particular satellite. The PN-$j$ code and the navigation data ND-$j$ are combined via modulo-two addition prior to modulating the carrier signal. The navigation data ND-$j$ includes a satellite identifier, timing information, satellite health indicators, orbital data and parity bits.

Controlling ground station 20 comprises an antenna 22 for receiving GPS signals 14-$j$ and transmitting correction signals 24-$j$, a plurality of correlators *26-m* for detecting GPS signals 14-$j$ and a processor 28 having software for tracking GPS satellites 12-$j$ using detected GPS signals and for determining correction signals *24-j* for each satellite, where $m$ = 1, ..., M. Correction signals 24-$j$ include satellite clock offsets from actual GPS system time, such as bias and drift components, for purposes of providing updated position and timing information to GPS satellites 12-$j$.

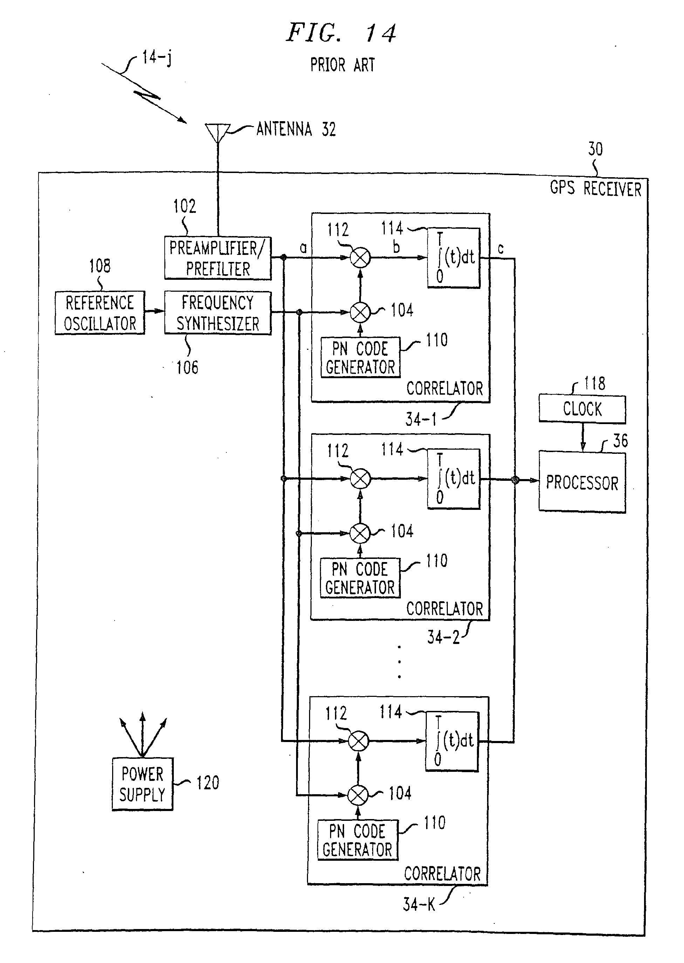

FIG. 14 depicts GPS receiver 30 comprising an antenna 32 for receiving GPS signals 14-$j$, a plurality of correlators 34-$k$ for detecting GPS signals 14-$j$, a processor 36 having software for determining a geolocation position using the detected GPS signals 14-$j$, a preamplifier/ prefilter 102 to filter and boost received GPS signals 14-$j$, a frequency synthesizer 106, a reference oscillator 108 to provide timing to frequency synthesizer 106, and a clock 118 to provide timing to processor 36, where $k$ = 1,2,...,K. Correlators 34-$k$ include a pseudo-random noise (PN) code generator 110, multipliers 104 and 112, and an integrate and dump filter 114. GPS receiver 30 detects GPS signals 14-$j$ via PN-$j$ codes. Note that PN code generator 110 may or may not be part of correlator 34-$k$.

Detecting GPS signals 14-$j$ involves a correlation process wherein correlators 34-$k$ search received GPS signals 14-$j$ for PN-$j$ codes in a carrier frequency dimension and a code phase dimension. The correlation process is implemented using multiplier 112 to perform real-time multiplication of received GPS signals 14-$j$ with phase shifted replicated PN- $j$ codes modulated onto a replicated carrier signal at a known frequency and using and dump filter 114 to perform integrations on multiplier 112's output signal.

In the carrier frequency dimension, GPS receiver 30 replicates carrier signals using reference oscillator 108 and frequency synthesizer 106 to match the frequencies of GPS signals 14-$j$ as they arrive at GPS receiver 30. Due to the Doppler effect, the frequency $f$ at which GPS signals 14-$j$ are transmitted changes an unknown amount $\Delta f_j$, before GPS signal 14-$j$ arrives at GPS receiver 30. Thus, GPS signal 14-$j$ has a frequency $f+\Delta f_j$ upon arrival at GPS receiver 30. GPS receiver 30 accounts for the Doppler effect by replicating the carrier signals across a frequency spectrum $f_{spec}$ ranging from $f+\Delta f_{min}$ to $f+\Delta f_{max}$ until the frequency of the replicated carrier signal matches the frequency of the received GPS signal 14-$j$, wherein $\Delta f_{min}$ and $\Delta f_{max}$ are a minimum and a maximum change in frequency GPS signals 14-$j$ will undergo due to the Doppler effect as they travel from satellites 12-$j$ to GPS receiver 30. In other words, $\Delta f_{min} \leq \Delta f_j \leq \Delta f_{max}$.

In the code phase dimension, GPS receiver 30 replicates the unique PN-$j$ codes associated with each satellite 12-$j$ using PN code generator 110 wherein the replicated PN-$j$ codes are modulated onto replicated carrier signals via multiplier 104. The phases of the replicated PN-$j$ codes are shifted across code phase spectrums $R_j$(spec) until replicated carrier signals modulated with replicated PN-$j$ codes correlate, if at all, with GPS signals 14-$j$ being received by GPS receiver 30, wherein each code phase spectrum $R_j$(spec) includes every possible phase shift for the associated PN-$j$ code. That is, phase-shifted PN-$j$ codes modulated onto replicated carrier signals are multiplied using multiplier 112 with received GPS signals 14-$j$ to produce an output signal that undergoes and integrate and dump process via integrate and dump filter 114.

Correlators 34-$k$ are configured to perform parallel searches for a plurality of PN-$j$ codes across the frequency spectrum $f_{spec}$ and their associated code phase spectrum $R_j$(spec), i.e. in both the frequency and code dimensions. Each of the plurality of correlators 34-$k$ are dedicated to searching for a particular PN-$j$ code across each possible frequency along $\Delta f_{min} \leq \Delta f_j \leq \Delta f_{max}$ and each possible phase shift for that PN-$j$ code. When a correlator 34-$k$ completes its search for a PN-$j$ code, the correlator 34-$k$ searches for another PN-$j$ code in the same manner. This process continues until all PN-$j$ codes are collectively searched for by the plurality of correlators 34-$k$. For example, suppose there are twelve satellites 12-$j$, thus there would be twelve unique PN-$j$ codes. If GPS receiver 30 has six correlators 34-$k$, then GPS receiver 30 would use its correlators 34-$k$ to search for two sets of six different PN-$j$ codes at a time. Specifically, correlators 34-$k$ search for the first six PN-$j$ codes, i.e. correlator 34-1 searches for PN-1, correlator 34-2 searches for PN-2, etc. Upon completing the search for the first six PN-$j$ codes, correlators 34-$k$ search for the next six PN-*j* codes, i.e. correlator 34-1 searches for PN-7, correlator 34-2 searches for PN-8, etc.

For correlator 34-*k* searching for a each PN-*j* code , an integrate and dump process is performed for each combination of frequency and phase shifts for that PN-*j* code. For example, suppose the frequency spectrum $f_{spec}$ includes 50 possible frequencies for the carrier signal and the code phase spectrum $R_j(spec)$ for a PN-*j* code includes 2,046 possible half-chip phase shifts. To search for every possible combination of frequency and half-chip phase shifts for the PN-*j* code, the correlator 34-*k* would need to perform 102,300 integrations. A typical integration time for correlators 34-*k* is 1 ms, which is sufficient for GPS receiver 30 to detect GPS signals 14-*j* when there is a strong signal-to-noise ratio, such as where antenna 32 has a clear view of the sky or a direct line-of-sight to satellites 12-*j*. Thus, for this example, 102.3 seconds would be required for one correlator 34-*k* to search every possible combination of frequency and half-chip phase shifts for one PN-*j* code.

After GPS signals 14-*j* are detected by correlators 34-*k*, processor 36 calculates pseudo-ranges for each detected satellite 12-*j* by performing fast Fourier transform (FFT), discrete Fourier transform (DFT) or equivalent operations on the output signals of correlators 34-*k*. Each pseudo-range corresponding to an estimate of the distance from detected satellite 12-*j* to GPS receiver 30 based upon a propagation delay associated with GPS signal 14-*j* traveling from detected satellite 12-*j* to GPS receiver 30 plus delays based on timing offsets in clocks for satellite 12-*j* and GPS receiver 30 from actual GPS time. Pseudo-range measurements from GPS receiver 30 to detected satellites 12-*j* are combined using processor 36 to determine an approximate position of GPS receiver 30, as is well known in the art.

GPS receivers 30 are now being incorporated into mobile telephones or other types of mobile communications devices that do not always have a clear view of the sky. In these situations, signal-to-noise ratios of GPS signals 14-*j* received by GPS receiver 30 are typically much lower than when GPS receiver 30 has a clear view of the sky, thus making it more difficult for GPS receiver 30 to detect GPS signals 14-*j*. To compensate for weaker signal-to-noise ratios and enhance detection of GPS signals 14-*j*, correlators 34-*k* can be configured with longer integration times. A sufficient integration time, in this case, would be approximately 1 second. Thus, for the example above, 102,300. seconds would be required for a correlator 34-*k* to search for every possible combination of frequency and half-chip phase shifts for one PN-*j* code. Longer integration times result in undesirable longer acquisition times, i.e. time needed for detecting GPS signals 14-*j*.

Wireless assisted GPS (WAG) systems were developed to facilitate acquisition of GPS signals 14-*j* by GPS receivers configured with short or long integration times. The WAG system facilitates acquisition of GPS signals 14-*j* by reducing the number of integrations to be performed by correlators searching for GPS signals 14-*j*. The number of integrations is reduced by narrowing the frequency range and code phase ranges to be searched. Specifically, the WAG system limits the search for GPS signals 14-*j* to a specific frequency or frequencies and to a range of code phases less than the code phase spectrum $R_j(spec)$.

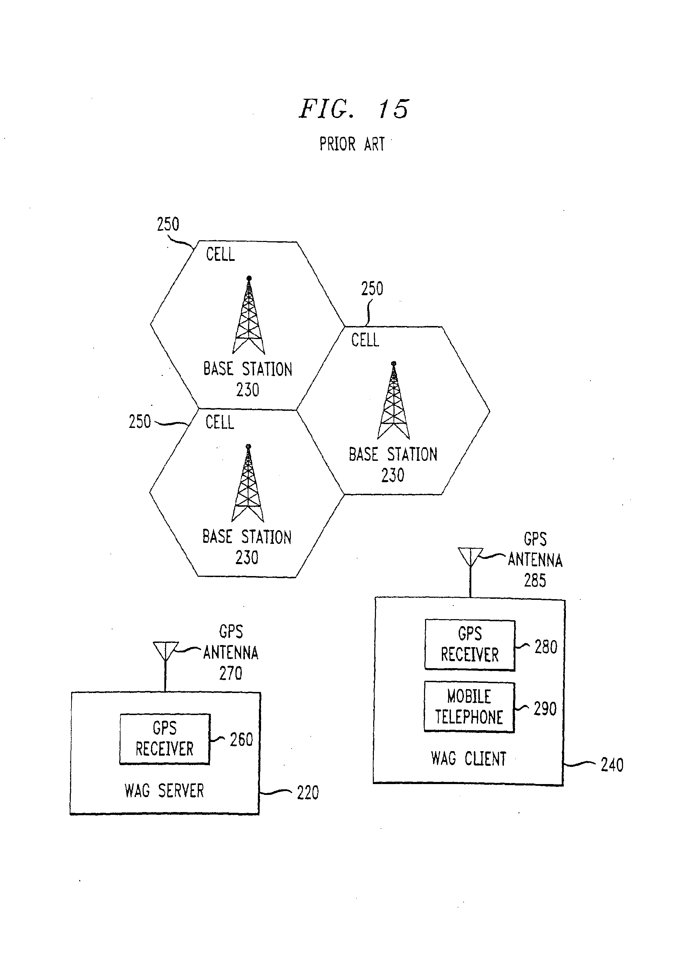

FIG. 15 depicts a prior art WAG system 200 comprising a WAG server 220, a plurality of base stations 230 and at least one WAG client 240. WAG server 220 is a device for facilitating detection of GPS signals 14-*j* by WAG client 240, and includes a GPS receiver 260 having an antenna 270 installed in a known location with a clear view of the sky, wherein GPS receiver 260 would typically have correlators configured with short integration times because antenna 270 has a clear view of the sky. WAG server 220 being operable to communicate with base stations 230 either through a wired or wireless interface. Each base station 230 has a known location and provides communication services to WAG clients 240 located within a geographical area or cell 250 associated with base station 230, wherein each cell 250 is a known size and is divided into a plurality of sectors. WAG client 240 includes GPS receiver 280, GPS antenna 285 and perhaps a mobile-telephone 290, and is typically in motion and/or in an unknown location with or without a clear view of the sky. GPS receiver 280 having correlators typically configured with long integration times. Note that the term "mobile-telephone" for purposes of this application, shall be construed to include, but is not limited to, any communication device.

WAG server 220 predicts frequencies and code phase search ranges for visible satellites based on detected GPS signals 14-*j* at WAG server 220 and a known location of base station 230 or cell 250 which is currently serving WAG client 240, wherein visible satellites are a set of all satellites 12-*j* which are in view of WAG server 220, i.e., WAG server 220 can detect GPS signals 14-*j* transmitted by visible satellites. This set of all satellites 12-*j* is known as a visible set. The predicted frequencies and code phase search ranges for visible satellites, including indications of the visible satellites, are transmitted from WAG server 220 to WAG client 240 through base station 230. WAG client 240 uses this information to perform a focused parallel search for GPS signals 14-*j*. Specifically, the correlators of GPS receiver 280 search for the indicated satellites at the predicted frequencies and code phase search ranges. Thus, the total number of integrations is reduced because the entire frequency spectrum $f_{spec}$ and code phase spectrum $R_j(spec)$ are not being searched, thereby reducing the overall acquisition time.

Although WAG system 200 reduces the number of integrations required by WAG clients 240 to detect GPS signals 14-*j*, the detection of GPS signals 14-*j* are not enhanced in environments where GPS signals 14-*j* have low signal to noise ratios. Thus, longer integrations are still required in low signal to noise environments. Integration times longer than twenty milliseconds in duration may cause GPS receiver sensitivity, i.e. the ability to detect GPS signals 14-*j*, to degrade. The reason for this degradation is because each bit of navigation data ND-*j* spans a duration of twenty milliseconds. Integrations longer than twenty milliseconds results in an integration period which includes transitions from one bit navigation data ND-*j* to another bit, thereby degrading GPS receiver sensitivity.

One way to resolve this problem is to remove the navigation data ND-*j* from the received GPS signals 14-*j* prior to integration (e.g., points a and b) or after integration but before processing (e.g., point c) by processor 36. This technique is referred to herein as data or modulation wipeoff.

In the prior art, data wipeoff is performed using previously received navigation data ND-*j* to remove the navigation data ND-*j* in currently received GPS signals 14-*j*. Using previously received navigation data ND-*j* to perform data wipeoff may result in incomplete removal/wipeoff of current navigation data ND-*j* because previously received navigation data ND-$j_{-1}$, would not necessarily be identical to current navigation data ND-*j*. Incomplete data wipeoff introduces bit errors thereby reducing GPS receiver sensitivity which, in turn, necessitates integration times longer in duration than if data wipeoff was complete.

Incomplete data wipeoff may also result when the previously received navigation data ND-*j* (being used to perform data wipeoff) is applied at the incorrect time. Accordingly, there exists a need for a method of enhancing data wipeoff.

EP-A-1008862 discloses a method for estimating a PRN synchronization and Doppler shift of a satellite signal at a reference location within a cell and sector of where a wireless terminal or WAG client is located. The estimates are based on information conveyed by a GPS signal acquired by an auxiliary system or WAG server, which may be at a location different from the wireless terminal or WAG client. The PRN synchronization and Doppler shift estimates are also based on some reference time, which is a time that is sufficiently far into the future to allow the WAG client to demodulate and decode the PRN synchronization and Doppler shift estimates from an assisting message transmitted by the WAG server and to use such estimates to acquire GPS signals, wherein the assisting message indicates the PRN synchronization and Doppler shift estimates.

WO97/14056 discloses a combined GPS and communication system which includes an antenna for receiving data representative of GPS signals, a frequency converter coupled to the antenna, a frequency synthesizer coupled to the frequency converter, an analog to digital converter coupled to the frequency converter and a processor coupled to the frequency converter. The processor processes the data representative of GPS signals to determine a pseudorange based on the data representative of GPS signals. The integrated communication receiver includes a shared component which is at least one of the antenna, the frequency converter, the frequency synthesizer and the analog to digital converter. The processor also demodulates communication signals received as well as controls the modulation of data to be transmitted as a communication signal through a communication link.

According to this invention there is provided a method as claimed in claim 1.

The present invention is a method for enhancing data wipeoff using predicted future navigation data and improved timing alignment. Proper time alignment of predicted future navigation data to the navigation data to be wipeoff enhances data wipeoff by reducing or eliminating the amount of incomplete wipeoff. In one embodiment, the future navigation data is predicted for a particular satellite and a first or starting bit in the predicted future navigation data is time aligned to a corresponding reference bit in the navigation data to be wiped off. Specifically, the transmission time at the satellite of the reference bit is determined and added to a propagation delay associated with the satellite to obtain an action time for applying the predicted navigation data at a GPS receiver or WAG client to GPS signals transmitted by the satellite.

BRIEF DESCRIPTION OF THE DRAWINGS

The features, aspects, and advantages of the present invention will become better understood with regard to the following description, appended claims, and accompanying drawings where:

FIG. 1 depicts a complete navigation data set;
FIG. 2 depicts one frame of navigation data broken into subframes and words;
FIGS. 3 and 4 depict the data bits in a Telemetry (TLM) Word and in a Hand Over Word (HOW) for each subframe;
FIG. 5 is a flowchart depicting a receive subframe program;
FIG. 6 depicts a parity check algorithm for a word in a subframe;
FIG. 7 and 8 is a flowchart depicting a subframe updating algorithm;
FIG. 9 depicts the relationship between a current subframe and a prediction subframe;
FIG. 10 is flowchart 800, showing a subframe prediction algorithm;

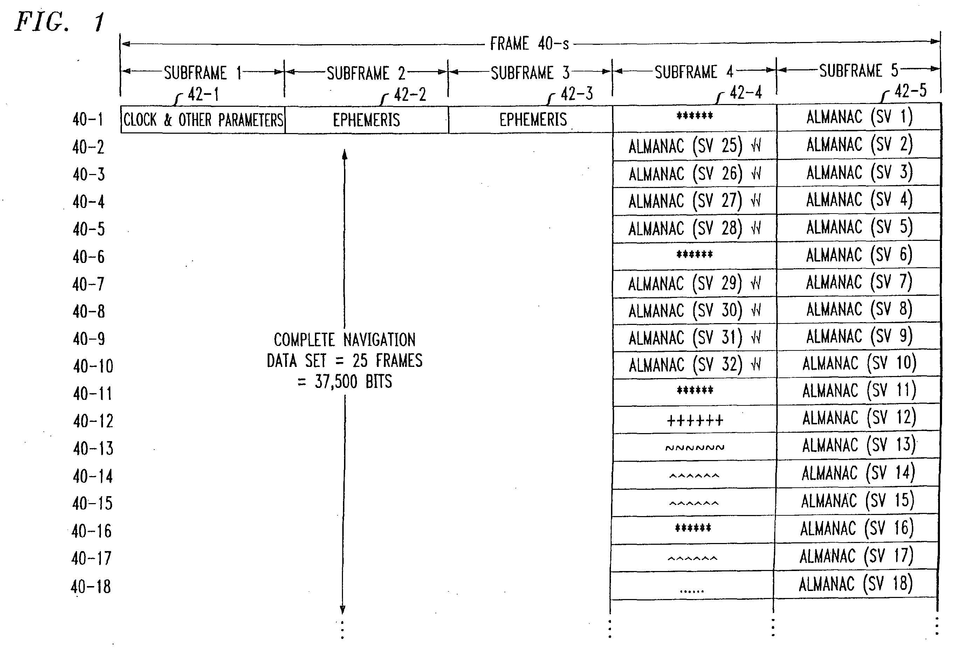

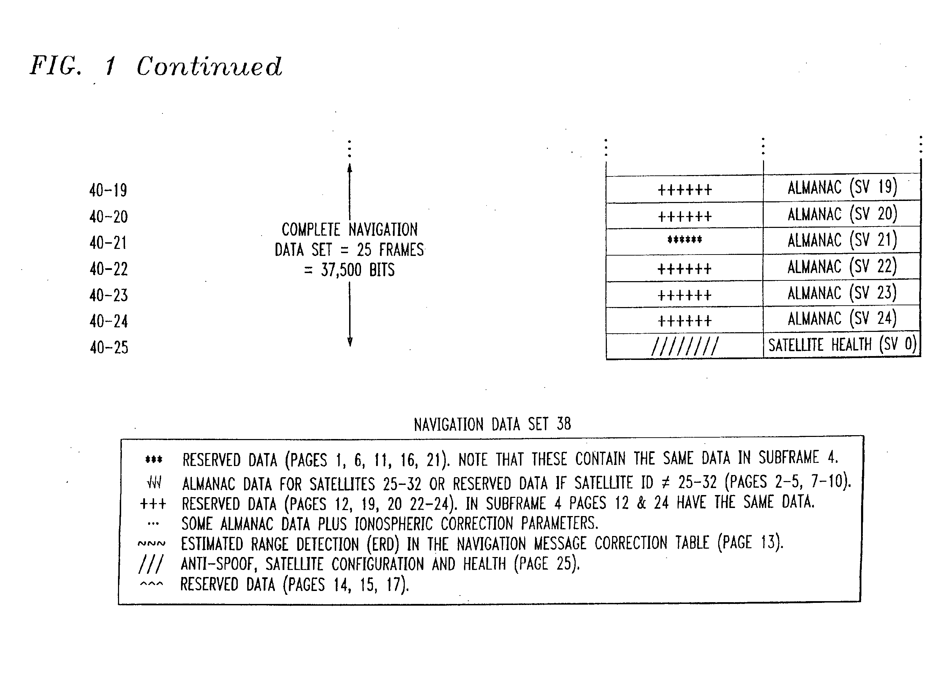

FIG. 1 depicts a parity check algorithm for word two in a subframe; and

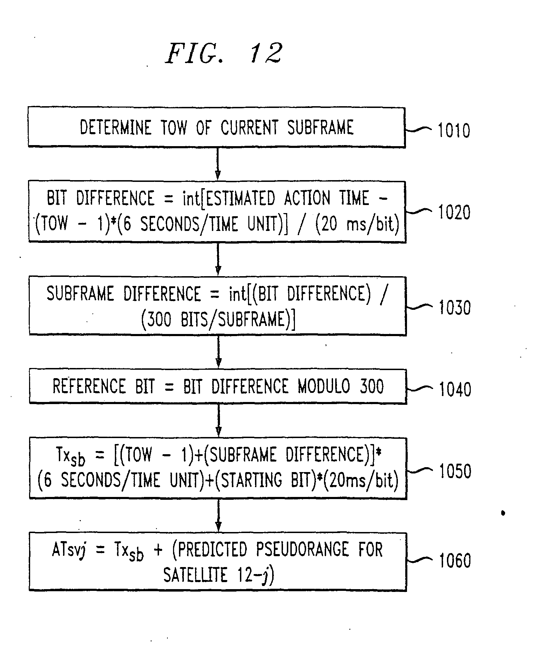

FIG. 12 depicts a flowchart depicting a timing alignment algorithm;
FIG. 13 depicts a well-known satellite-based navigation system referred to as the Global Positioning System (GPS) in accordance with the prior art;
FIG. 14 depicts a GPS receiver in accordance with the prior art; and
FIG. 15 depicts a Wireless Assisted GPS (WAG) system in accordance with the prior art.

## DETAILED DESCRIPTION

The present invention is a method for enhancing data wipeoff using predicted future navigation data and improved timing alignment The present invention involves predicting future navigation data using previously received navigation data and time aligning the predicted future navigation data to data to be wiped off. Thus, the present invention will be described herein in two parts. A description of how future navigation data is predicted from previously received navigation data constitutes the first part, and a description of time aligning the predicted future navigation data to the data to be wiped off constitutes the second part.

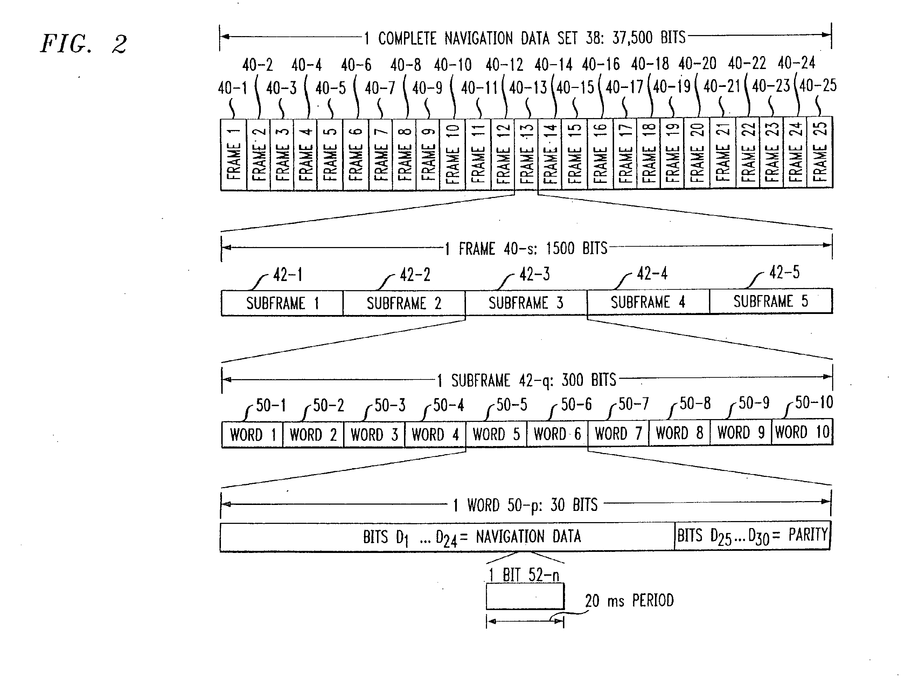

In the first part of the description of the present invention, predicting future navigation data requires an understanding of the components which make up navigation data. Navigation data includes navigation data bits and parity bits, wherein navigation data bits comprise a satellite identifier, timing information, satellite health indicators and orbital data, such as ephemeris and almanac information. FIGS. 1 and 2 depict a high level and a detailed illustration of a complete navigation data set 38, respectively. Navigation data set 38 comprises twenty-five frames 40-*s* having a total of 37,500 bits, wherein each frame comprises fifteen hundred bits and is transmitted over a thirty-second interval (i.e., each bit is transmitted over a twenty millisecond interval). Thus, all twenty-five frames of navigation data set 38 are sent over a period of twelve and one half minutes. Navigation data set 38 is valid (or does not generally change) for a fixed or non-fixed period (hereinafter referred to as a "data set period"), e.g. two hours. That is, the same basic twenty-five frames of navigation data set 38 are continuously transmitted during a data set period with a few exceptions, as will be described herein.

Each frame 40-*s* includes five subframes 42-*q*, wherein each subframe 42-*q* comprises three hundred bits. Subframe one 42-1 includes parity bits and navigation data bits corresponding to a GPS week number, satellite accuracy and health, and satellite clock correction terms. Subframes two 42-2 and three 42-3 include parity bits and navigation data bits corresponding to ephemeris parameters. Most of the information transmitted over subframes one 42-1, two 42-2 and three 42-3 will not change from frame to frame during a data set period.

Subframe four 42-4 includes parity bits and navigation data bits corresponding to a page of almanac data, special messages, ionospheric, timing data, page ID, satellite configuration and/or reserved data. There are a total of twenty-five such pages to be transmitted over the fourth subframe 42-4, wherein each page is transmitted every twenty-fifth frame. Most of the information comprising each of the twenty five pages transmitted over subframe four 42-4 will not change during a data set period.

Subframe five 42-5 includes parity bits and navigation data bits corresponding to almanac data. satellite health, satellite ID, almanac reference time and/or almanac reference week number. There are a total of twenty-five such pages to be transmitted over subframe five 42-5, wherein each page is transmitted every twenty-fifth frame. Most of the information comprising each of the twenty five pages transmitted over subframe five 42-5 will not change during a data set period.

Each subframe 42-*q* includes ten words 50-*p*, wherein each word 50-*p* comprises thirty bits, as shown in FIG. 2. The twenty-four most significant bits of word 50-*p* are navigation data bits, and the six least significant bits of word 50-p are parity bits for that word 50-*p*.

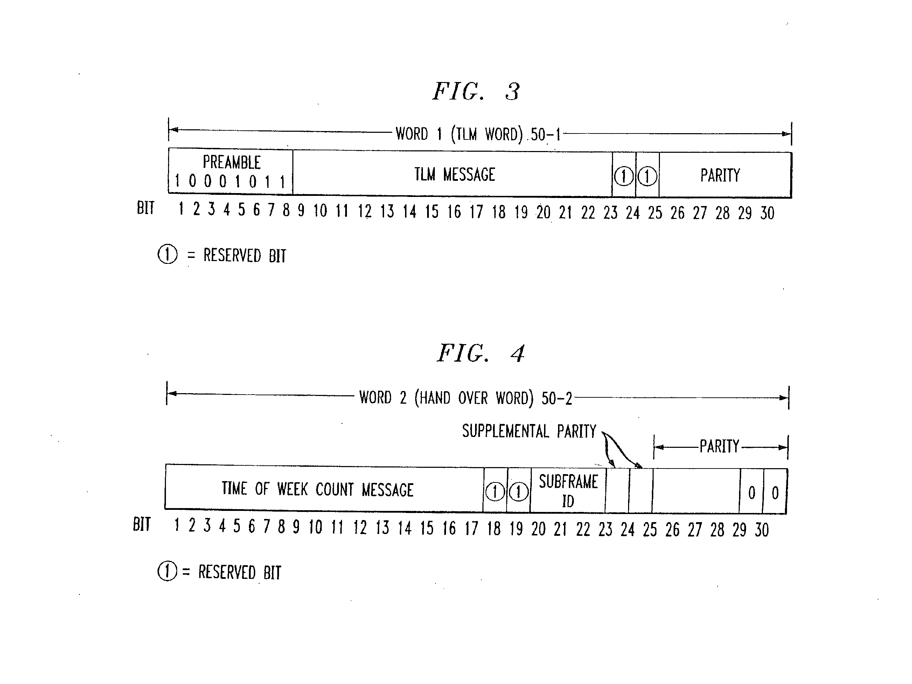

Word one 50-1 of each subframe 42-*q* is commonly referred to as the telemetry, or TLM word. FIG. 3 depicts TLM word 50-1. TLM word 50-1 comprises six parity bits and twenty four navigation data bits including an eight-bit preamble for identifying a start of a subframe, fourteen bits of a TLM message and two reserved bits. During a data set period, TLM word 50-1 of each subframe 42-*q* in each frame 40-*s* will be the same. For example, TLM word 50-1 in subframe one 42-1 of frame 40-1, TLM word 50-1 in subframe four 42-4 of frame 40-1 and TLM word 50-1 in subframe three 42-3 of frame 40-3 are identical during the same data set period. Thus, predicting a future TLM word 50-1 for any subframe 42-*q* for a data set period involves copying a previous TLM word 50-1 that was transmitted during the same data set period.

Word two 50-2 of each subframe 42-*q* is commonly referred to as a Hand Over Word (HOW). FIG. 4 depicts HOW 50-2. HOW 50-2 includes six parity bits and twenty four navigation data bits including most significant bits of a time of week count (TOW) message, two reserved bits, three bits for identifying subframe 42-*q* (known as a Subframe ID) and two supplemental parity bits, wherein the last two parity bits are always zero. The TOW message increments by one time unit, e.g. six seconds or one bit, per subframe, and provides a time reference to GPS time, wherein the time reference indicates a start transmission time for an immediately succeeding subframe 42-*q* from satellite 12-*j* and can be converted to a time of week count in GPS time using an appropriate conversion factor (e.g., six seconds per time unit). For example, the TOW message in subframe three 42-3 of a frame 40-1 is found by incrementing the TOW message in subframe two 42-2 of frame 40-1 by one time unit. If each time unit represents six seconds, then the appropriate conversion factor is six seconds per time unit and the time reference can be converted into a time of week count (in GPS time) by multiplying the time reference by six. Because the TOW message increments a time unit every subframe, the parity bits will also change in HOW 50-2 of each subframe 42-*q* in each frame 40-*s* to account for the changing TOW message. Thus, predicting a future HOW 50-2 for any subframe 42-*q* involves incrementing the TOW message of a previous HOW 50-2 a time unit for every subframe from previous HOW 50-2 to and including future HOW 50-2 being predicted, and predicting the parity bits, as will be described herein. Note that the TOW message may be predicted for future subframes 42-*q* even if such future subframes 42-*q* will occur after the current data set period.

Words three 50-3 through ten 50-10 of subframe one 42-1 comprise, for each word, six parity bits and twenty four navigation data bits corresponding to a GPS week number, satellite accuracy and health, and/or satellite clock correction terms, including an Issue of Data for Clock (IODC) parameter. Words three 50-3 through ten 50-10 of subframes two 42-2 and three 42-3 comprise, for each word, six parity bits and twenty four navigation data bits corresponding to ephemeris information, such as Issue of Data for Ephemeris (IODE). Like TLM word 50-1, words three 50-3 through ten 50-10 in subframes one 42-1, two 42-2 and three 42-3 do not change from frame to frame during the data set period. But note that words three 50-3 through ten 50-10 in subframes one 42-1, two 42-2 and three 42-3 are not identical to each other. For example, word three 50-3 of subframe one 42-1 in a first frame 40-1 is the same as word three 50-3 of subframe one 42-1 in a second frame 40-2 during a data set period, but word three 50-3 of subframe one 42-1 in the first frame 40-1 is different from word ten 50-10 of subframe 42-1 in the first frame 40-1 or any other subframe in any other frame. Thus, predicting future words three 50-3 through ten 50-10 for subframes one 42-1, two 42-2 and three 42-3 for a data set period involves copying words three 50-3 through ten 50-10 of previous subframes one 42-1, two 42-2 and three 42-3, respectively, transmitted during the same data set period.

Note that the IODC parameter is represented by ten bits in subframe one 42-1. Specifically, the two most significant bits of the IODC parameter are in word three 50-3 of subframe one 42-1 and the eight least significant bits of the IODC parameter are in word eight 50-8 of subframe one 42-1. The IODE parameter is represented in both subframes two 42-2 and three 42-3 by eight bits; that is, the IODE parameter is represented by eight bits in subframe two 42-2 and again by eight identical bits in subframe three 42-3. Specifically, the IODE parameter is in word three 50-3 of subframe two 42-2 and in word ten 50-10 of subframe three 42-3. The eight least significant bits of the IODC parameter are equal to the eight bits of the IODE parameter in subframe two 42-2, which are equal to the eight bits of the IODE parameter in subframe three 42-3, during a data set period.

As shown in back in FIGS. 1 and 2, words three 50-3 through ten 50-10 of subframe four 42-4 comprise six parity bits and twenty four navigation data bits corresponding to satellite almanac and health data, reserved bits, satellite configuration flags and/or ionospheric data; and words three 50-3 through ten 50-10 of subframe five 42-5 comprise six parity bits and twenty four navigation data corresponding to satellite almanac and health data and/or almanac reference time and week number.

The page of subframe four 42-4 is identified by the page ID parameter, which is located in word three 50-3. By contrast, the page of subframe five 42-5 is identified by the satellite ID parameter, which is located in word three 50-3. During a data set period, words three 50-3 through ten 50-10 of pages one through twenty-five in subframes four 42-4 and five 42-5 do not change (although the words and pages change from subframe to subframe and from frame to frame, respectively). Thus, predicting future words three 50-3 through ten 50-10 for subframes four 42-4 and five 42-5 for a data set period involves copying words three 50-3 through ten 50-10 of subframes four 42-4 and five 42-5, respectively, of a frame transmitted 25x frames earlier during the same data set period, wherein *x* is an integer.

Thus, if a data set period did not change, a navigation data set to be transmitted by a satellite 12-*j* during the same data set period can be predicted using a previous navigation data set transmitted during the same data set period by predicting the TOW message and parity bits of word two 50-2, as will be described later herein.

One way to determine whether a data set period has changed, i.e. navigation data set 38 is no longer valid and a new navigation data set issued, is to compare the IODC and IODE parameters. 1 the IODC and/or IODE parameters changed from one frame to the next frame (or from one subframe to the next subframe), then the data set period has changed. Otherwise, the data set period has not changed. The specific bits being compared are the eight least significant bits of the ten bits corresponding to the IODC parameter in subframe one 42-1, the eight bits corresponding to the IODE parameter in subframe two 42-2 and/or the eight bits corresponding to the IODE parameter in subframe three 42-3. A change in any one of the aforementioned bits signifies a new data set period. For example, the eight least significant bits of IODC in subframe one 42-1 of a current frame 40-2 are compared to the eight least significant bits of IODC in subframe one 42-1 of an immediately preceding frame 40-1. If the eight least significant bits of IODC in current frame 40-2 are not equal to the eight least significant bits of IODC in immediate preceding frame 40-1, then current frame 40-2 is a part of a new data set. Similarly, the IODE parameter in subframe two 42-2 of a current frame can be compared to the IODE parameter in subframe two 42-2 of an immediate preceding frame. If the IODE parameter in subframe two 42-2 of a current frame is not equal to the IODE parameter in subframe two 42-2 of an immediate preceding frame, then the current frame is a part of a new data set. Or, the IODE parameter in subframe three 42-3 of a current frame can be compared to the IODE parameter in subframe three 42-3 of an immediate preceding frame. If the IODE parameter in subframe three 42-3 of the current frame is not equal to the IODE parameter in subframe three 42-3 of the immediate preceding frame, then the current frame is a part of a new data set. Alternatively, the eight least significant bits of the ten bits corresponding to the IODC parameter in subframe one 42-1 are compared to the eight bits corresponding to the IODE parameter in subframe two 42-2 and the eight bits corresponding to the IODE parameter in subframe three 42-3 belonging to the same frame or a different frame.

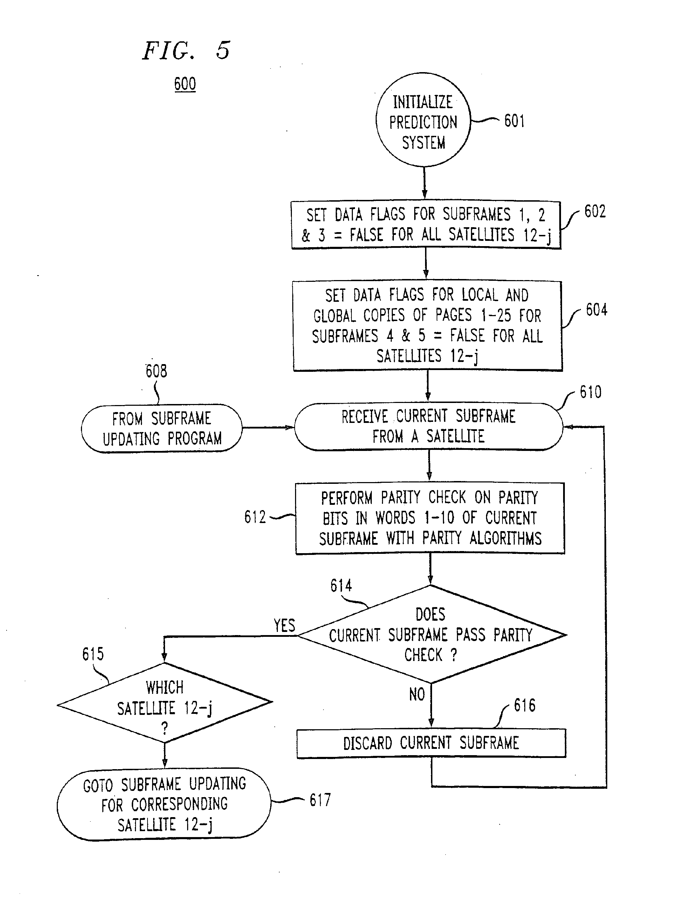

Based on the above description of navigation data, future navigation data can be predicted for some future time, hereinafter referred to as an "action time," once previous navigation data is available. In other words, the present invention of predicting future navigation data involves receiving navigation data and predicting future navigation data for the action time using the received navigation data. In one embodiment, receiving navigation data involves reception of navigation data, updated stored previously received navigation data with the received navigation data, and predicting future navigation data using the updated stored previously received navigation data. FIGS. 5, 7, 8 and 10 are flowcharts illustrating an implementation of this embodiment, and will be described in greater detail herein.

FIG. 5 is flowchart 600 illustrating a receive subframe program, which is one manner of receiving navigation data ND-*j* transmitted from a plurality of satellites 12-*j*. The receive subframe program performs initialization, subframe reception, parity checking and satellite identification. Initialization is performed during steps 601 to 604. In step 601, the receive subframe program is initiated. In step 602, subframe data flags for subframes one 42-1, two 42-2, and three 42-3 are set to false for each satellite 12-j. A false subframe data flag indicates system initialization of navigation data for the associated subframe, and prediction of associated future subframes is not currently possible. By contrast, a true subframe data flag indicates that system initialization of the associated subframe is complete and prediction of associated future subframes is currently possible.

In step 604, local and global data flags for local and global copies of pages one to twenty five for subframes four 42-4 and five 42-5 are set to false for each satellite 12-*j*. Local and global copies will be described later herein. A false local or global data flag for a local or global copy of a page indicates system initialization of navigation data for the associated page, and prediction of associated future pages is not currently possible. By contrast, a true local or global data flag for a local or global copy of a page indicates that system initialization of the associated page is complete and prediction of associated future pages is currently possible.

Subframe reception is performed in step 610. Subframe reception may occur after step 604, after step 616, or after step 608 (when the receive subframe program returns from a subframe updating program). In step 610, current subframe 42-*q* is received from satellite 12-*j* transmitting GPS signal 14-*j*. Alternatively, step 610 could receive, instead of a complete subframe, one word at a time or even a bit stream of navigation data ND-*j*.

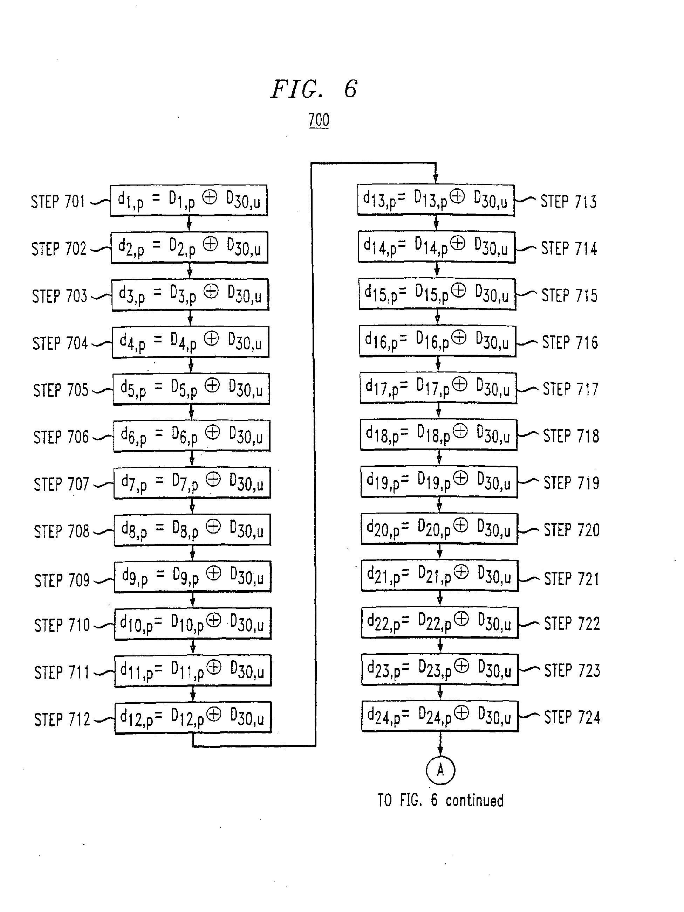

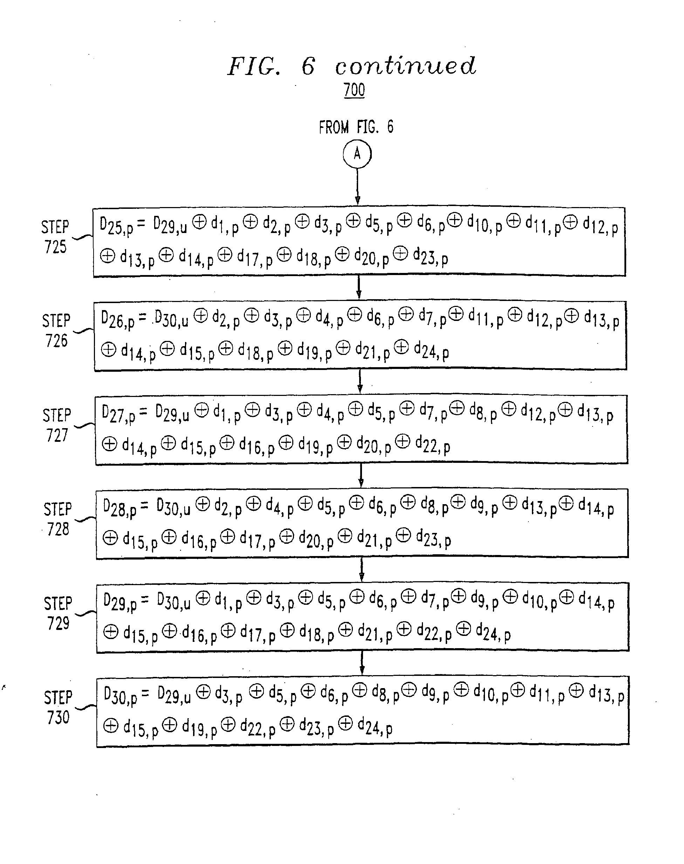

Parity checking is performed in steps 612 to 616. Step 612 checks parity for current subframe 42-*q*, i.e. parity for each word in subframe 42-*q*, employing a parity algorithm. FIG. 6 depicts a flowchart 700 of a parity algorithm used in accordance with one embodiment of the present invention for performing parity check on word 50-*p*. The parity algorithm shows how the six parity bits in word 50-*p* are derived from modulo-two combinations of navigation data bits for word 50-*p* and the last two parity bits from an immediately preceding word 50-*u*, where $u = p-1$ 1 for $p>1$ and $u=10$ for $p=1$. For ease of discussion, specific bits will hereinafter be referenced using the following nomenclature $D_{bit,word}$, where "bit" and "word" corresponds to a specific bit and word. For example, bit $D_{1.p}$ references the first bit in word 50-*p*.

In step 701, a modulo two sum operation is performed between received navigation bit $D_{1,p}$, and received parity bit $D_{30.u}$, i.e., between the received first navigation data bit for word 50-*p* and the received last parity bit (or thirtieth bit) of word 50-*u*. The modulo two sum of $D_{1.p}$ and $D_{30.u}$ is represented by $d_{1.p}$. Likewise, in steps 702...724, modulo two sum operations are performed between the received next navigation data bit (i.e. $D_{2.p}$, $D_{3.p}$, ... $D_{24,p}$) and parity bit $D_{30.u}$ to obtain the modulo two sums (i.e. $d_{2.p}$, $d_{3.p}$, ...$d_{24.p}$).

Once $d_{1.p}$...$d_{24.p}$ are determined, parity bits $D_{25.p}$...$D_{30.p}$ are calculated for word 50-*p*. In step 725, modulo two sum operations are performed between $d_{1.p}$, $d_{2.p}$, $d_{3.p}$, $d_{5.p}$, $d_{6.p}$, $d_{10.p}$, $d_{11.p}$, $d_{12.p}$, $d_{13.p}$, $d_{14.p}$, $d_{17.p}$, $d_{18.p}$, $d_{20.p}$, $d_{23.p}$ and parity bit $D_{29.u}$ to obtain parity bit $D_{25.p}$. In step 726, modulo two sum operations are performed between $d_{2.p}$, $d_{3.p}$, $d_{4.p}$, $d_{6.p}$, $d_{7.p}$, $d_{11.p}$, $d_{12.p}$, $d_{13.p}$, $d_{14.p}$, $d_{15.p}$, $d_{18.p}$, $d_{19.p}$, $d_{21.p}$, $d_{24.p}$ and parity bit $D_{30.u}$ to obtain parity bit $D_{26.p}$. In step 727, modulo two sum operations are performed between $d_{1.p}$, $d_{3.p}$, $d_{4.p}$, $d_{5.p}$, $d_{7.p}$, $d_{8.p}$, $d_{12.p}$, $d_{13.p}$, $d_{14.p}$, $d_{15.p}$, $d_{16.p}$, $d_{19.p}$, $d_{20.p}$, $d_{22.p}$, and parity bit $D_{29.u}$ to obtain parity bit $D_{27.p}$. In step 728, modulo two sum operations are performed between $d_{2.p}$, $d_{4.p}$, $d_{5.p}$, $d_{6.p}$, $d_{8.p}$, $d_{9.p}$, $d_{13.p}$, $d_{14.p}$, $d_{15.p}$, $d_{16.p}$, $d_{17.p}$, $d_{20.p}$, $d_{21.p}$, $d_{23.p}$ and parity bit $D_{30.u}$ to obtain parity bit $D_{28.p}$. In step 729, modulo two sum operations are performed between $d_{1.p}$, $d_{3.p}$, $d_{5.p}$, $d_{6.p}$, $d_{7.p}$, $d_{9.p}$, $d_{10.p}$, $d_{14.p}$, $d_{15.p}$, $d_{16.p}$, $d_{17.p}$, $d_{18.p}$, $d_{21.p}$, $d_{22.p}$, $d_{24.p}$ and parity bit $D_{30.u}$ to obtain parity bit $D_{29.p}$. In step 730, modulo two sum operations are performed between $d_{3.p}$, $d_{5.p}$, $d_{6.p}$, $d_{8.p}$, $d_{9.p}$, $d_{10.p}$, $d_{11.p}$, $d_{13.p}$, $d_{15.p}$, $d_{19.p}$, $d_{22.p}$, $d_{23.p}$, $d_{24.p}$ and parity bit $D_{29.u}$ to obtain parity bit $D_{30.p}$. The calculated parity bits $D_{25.p}$...$D_{30.p}$ (from steps 725 to 730) are compared to received parity bits $D_{25.p}$...$D_{30.p}$ (i.e., parity bits received along with received navigation bits $D_{1.p}$... $D_{24.p}$)for word 50-*p* in the currently received subframe. Any difference between the calculated parity bits and received parity bits signifies associated received word 50-*p* (and thus subframe 42-*q*) has failed the parity check. Note that other parity algorithms are possible so long as the other parity algorithms would, if given the same bits from which to calculate parity bits, e.g. navigation data bits of current word and last two parity bits of preceding word, calculate identical parity bits.

Returning to FIG. 5, in step 614, if the calculated parity bits are not equal to received parity bits for any word 50-*p*, then word 50-*p* fails the parity check. Failed parity checks for any word 50-*p* in current subframe 42-*q* results in current subframe 42-*q* being discarded in step 616 before returning to step 610 in order to receive a next subframe 42-*q*. If current subframe 42-*q* passes parity check (i.e., all words 50-*p* in current subframe 42-*q* pass parity check), then satellite 12-*j* to which current subframe 42-*q* belongs is identified in step 615, for example, based on PN-*j* codes or the satellite ID parameter. Step 617 proceeds to updating previously received navigation data (hereinafter referred to as "subframe updating") for the identified satellite 12-*j*.

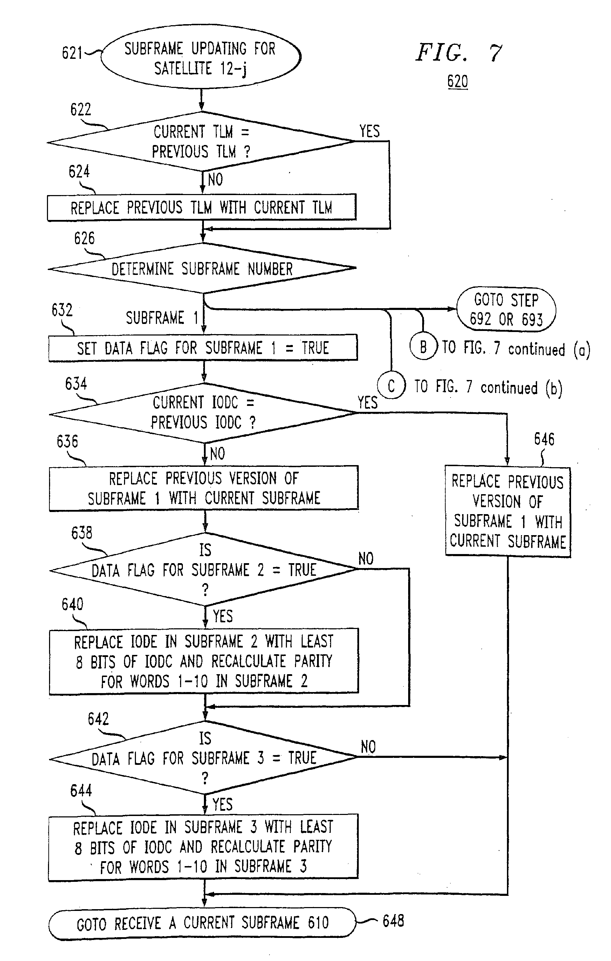

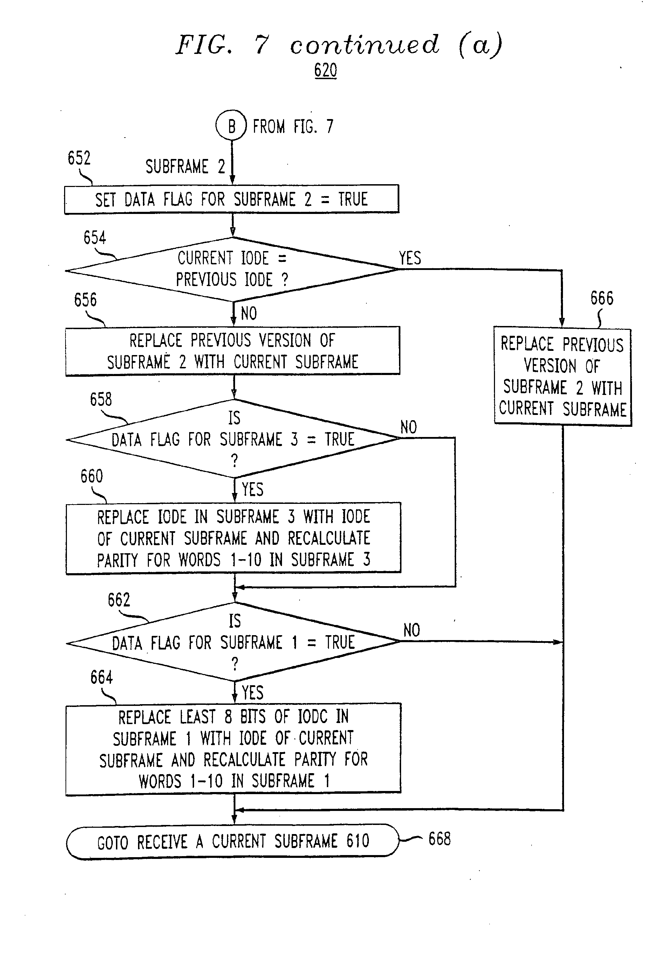

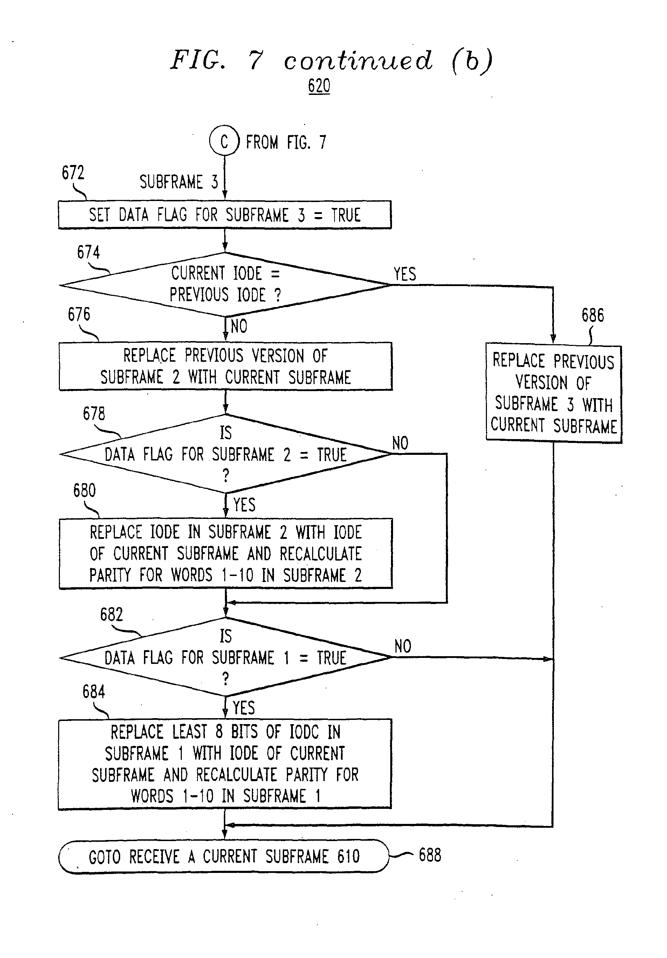

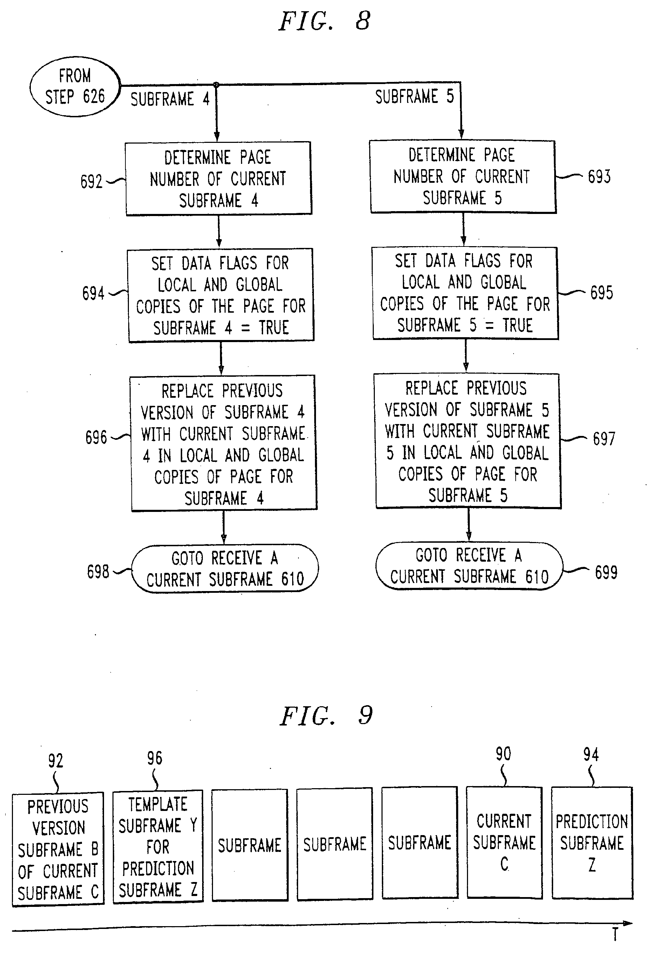

Subframe updating is a process where navigation data ND-*j* (stored in computer memory) is kept as current as possible so that predictions are based on the best or most up-to-date information available. FIGS. 7 and 8 depict flowchart 620 illustrating a subframe updating program for satellite 12-*j*. In step 621, subframe updating is initialized for satellite 12-*j* using received current subframe 42-*q* (from step 617 in flowchart 600 of FIG. 5). In step 622, it is determined whether current TLM word 50-1 (i.e. TLM word 50-1 in current subframe 42-*q*) is equal to previous TLM word 50-1 (i.e. TLM word 50-1 in a previous subframe 42-*q*), if any. If current TLM word 50-1 is not equal to previous TLM word 50-1 (as would be the case upon initialization), then previous TLM word 50-1 is replaced by current TLM word 50-1, in step 624.

After replacing previous TLM word 50-1, or when current TLM word 50-1 is equal to previous TLM word one 50-1, in step 626, the subframe number is determined for the current subframe by checking the three-bit Subframe ID in word two 50-2 to begin the process of updating the appropriate subframe. If the Subframe ID identifies the current subframe as subframe one 42-1, two 42-3, three 42-3, four 42-4 or five 42-5, then the next step is 632, 652, 672, 692 or 693, respectively.

Step 632 begins the process of updating subframe one. In step 632, the subframe data flag for subframe one 42-1 is set to true, indicating there is enough information to predict future versions of subframe one 42-1. In step 634, a current IODC parameter (i.e. IODC parameter in current subframe one 42-1) is compared with a previous IODC parameter (i.e. IODC parameter in a previous subframe one 42-1). If the current IODC parameter is equal to the previous IODC parameter, then previous subframe one 42-1, if any, is replaced by current subframe one 42-1, in step 646, for purposes of updating the TOW message in word two 50-2. Note that step 646 is not necessary as long as the number of frames or subframes between current subframe one 42-1 and previous subframe one 42-1 are known, thereby enabling the TOW message to be updated or calculated. After step 646, step 648 returns to subframe reception for the next subframe 42-q (in step 610 of flowchart 600).

If the current IODC parameter is not equal to the previous IODC parameter (as in the case of initialization or when the data set period changed), then previous subframe one 42-1 is still replaced with current subframe one 42-1, in step 636, in order to update subframe one 42-1 to the new data set. In step 638, the subframe data flag for subframe two 42-2 is checked. If the subframe data flag for subframe two 42-2 is true, (indicating there is enough information to predict future versions of subframe two 42-2) the next step is 640, where a previous IODE parameter for subframe two 42-2, if any, is replaced by the eight least significant bits of the IODC parameter from current subframe one 42-1 in order to keep the IODE parameter for subframe two 42-2 as current as possible prior to receiving the next subframe two 42-2 (i.e., subframe two 42-2 of new data set). Once the IODE parameter in subframe two 42-2 is updated, all words 50-p in subframe two 42-2 have their parity bits recomputed using a parity algorithm, such as parity algorithm 700 of FIG. 6.

Upon completion of step 640 or if the subframe data flag for subframe two 42-2 is false (indicating there is not enough information to predict future versions of subframe two 42-2), in step 642, the subframe data flag for subframe three 42-3 is checked. If the subframe data flag for subframe three 42-3 is true indicating there is enough information to predict future versions of subframe three 42-3 then, in step 644, an IODE parameter for subframe three 42-3, if any, is replaced by the eight least significant bits of the IODC parameter from current subframe one 42-1 in order to keep the IODE parameter for subframe three 42-3 as current as possible prior to receiving the next subframe three 42-3 (i. e., subframe three 42-3 of new data set). Once the IODE parameter in subframe three 42-3 is updated, all words 50-p in subframe three 42-3 have their parity bits recomputed using the parity algorithm. Upon completion of step 644, or when the subframe data flag for subframe three 42-3 is false indicating there is not enough information to predict future versions of subframe three 42-3, the next step is 648, which returns to step 610 of subframe reception in flowchart 600.

Note that steps 638 through 644 are optional steps for updating subframes two 42-2 and three 42-3 after the data set period has changed by replacing the IODE parameter and recalculating the parity bits based on stored navigation data for subframes two 42-2 and three 42-3 and the new IODC parameter. That is, after steps 640 and 644 are executed, the updated navigation data bits and parity bits stored in computer memory for subframes two 42-2 and three 42-3 comprise navigation data bits from previously received subframes two 42-2 and three 42-3 in which the IODE parameter has been replaced with the current eight least significant bits of the IODC parameter in the currently received subframe one 42-1 (i.e. updated navigation data bits) and re-calculated parity bits based on the updated navigation data bits.

Step 652 begins the process of updating subframe two 42-2. In step 652, the data flag for subframe two 42-2 is set to true, indicating there is enough information to predict future versions of subframe two 42-2. In step 654, a current IODE parameter (i.e. IODE parameter in current subframe two 42-2) is compared with a previous IODE parameter (i.e. IODE parameter in a previous subframe two 42-2). If the current IODE parameter is equal to the previous IODE parameter, then previous subframe two 42-2, if any, is replaced by current subframe two 42-2, in step 666, for purposes of updating the TOW message in word two 50-2. Note that step 666 is not necessary as long as the number of frames or subframes between current subframe two 42-2 and previous subframe two 42-2 are known, thereby enabling the TOW message to be updated or calculated. After step 666, step 668 returns to subframe reception for the next subframe 42-$q$ (in step 610 of flowchart 600).

If the current IODE parameter is not equal to the previous IODE parameter (as in the case of initialization or when the data set period changed) then previous subframe two 42-2 is still replaced with current subframe two 42-2, in step 656, in order to update subframe two 42-2 to the new data set. In step 658, the subframe data flag for subframe three 42-3 is checked. If the subframe data flag for subframe three 42-3 is true (indicating there is enough information to predict future versions of subframe three 42-3) the next step is 660, where the previous IODE parameter for subframe three 42-3, if any, is replaced by the IODE parameter from current subframe two 42-2 in order to keep the IODE parameter for subframe three 42-3 as current as possible prior to receiving the next subframe three 42-3. Once the IODE parameter in subframe three 42-3 is updated, all words 50-p in subframe three 42-3 have their parity bits recomputed using the parity algorithm.

Upon completion of step 660 or if the subframe data flag for subframe three 42-3 is false (indicating there is not enough information to predict future versions of subframe three 42-3), in step 662, the subframe data flag for subframe one 42-1 is checked. If the subframe data flag for subframe one 42-1 is true indicating there is enough information to predict future versions of subframe one 42-1, then in step 664 the eight least significant bits of IODC in subframe one 42-1 are replaced by the IODE parameter from current subframe two 42-2 in order to keep the IODC parameter for subframe one 42-1 as current as possible prior to receiving the next subframe one 42-1. Once the eight least significant bits of IODC in subframe one 42-1 are updated, all words 50-$p$ in subframe one 42-1 have their parity bits recomputed using the parity algorithm. Upon completion of step 664, or when the subframe data flag for subframe one 42-1 is false indicating there is not enough information to predict future versions of subframe one 42-1, the next step is 668, which returns to step 610 of subframe reception in flowchart 600.

Note that steps 658 through 664 are optional steps for updating subframes one 42-1 and three 42-3 after the data set period has changed by replacing the IODC parameter in subframe one 42-1 and the IODE parameter in subframe three 42-3 and recalculating the parity bits based on stored navigation data for subframes one 42-1 and three 42-3 and the new IODE parameter. That is, after steps 660 and 664 are executed, the updated navigation data bits and parity bits stored in computer memory for subframes one 42-1 and three 42-3 comprise navigation data bits from previously received subframes one 42-1 and three 42-3 in which the IODC and IODE parameters have been replaced with the current eight least significant bits of the IODE parameter in the currently received subframe two 42-2 (i.e. updated navigation data bits) and re-calculated parity bits based on the updated navigation data bits.

Step 672 begins the process of updating subframe three. In step 672, the subframe data flag for subframe three 42-3 is set to true, indicating there is enough information to predict future versions of subframe three 42-3. Step 674 compares a current IODE parameter (i.e. IODE parameter in current subframe three 42-3) with a previous IODE parameter (i.e. IODE parameter in a previous subframe three 42-3). If the current IODE parameter is equal to the previous IODE parameter, then previous subframe three 42-3 is replaced by current subframe three 42-3, in step 686, for purposes of updating the TOW message in word two 52-2. Note that step 686 is not necessary as long as the number of frames or subframes between current subframe three 42-3 and previous subframe three 42-3 are known, thereby enabling the TOW message to be updated or calculated. After step 686, step 688 returns to subframe reception for the next subframe (in step 610 of flowchart 600).

If the current IODE parameter in current subframe three 42-3 is not equal to the previous IODC parameter in previous subframe three 42-3 (as in the case of initialization or when the data set period changed), then previous subframe three 42-3 is still replaced with current subframe three 42-3, in step 676, in order to update subframe three 42-3 to the new data set. In step 678, the subframe data flag for subframe two 42-2 is checked. If the subframe data flag for subframe two 42-2 is true (indicating there is enough information to predict future versions of subframe two 42-2) the next step is 680, where the previous IODE parameter for subframe two 42-2, if any, is replaced by the IODE parameter from current subframe three 42-3 in order to keep the IODE parameter for subframe two 42-2 as current as possible prior to receiving the next subframe two 42-2. Once the IODE parameter in subframe two 42-2 is updated, all words 50-$p$ in subframe two 42-2 have their parity bits recomputed using the parity algorithm.

Upon completion of step 680 or if the subframe data flag for subframe two 42-2 is false (indicating there is not enough information to predict future versions of subframe two 42-2), in step 682. the data flag for subframe one 42-1 is checked. If the subframe data flag for subframe one 42-1 is true indicating there is enough information to predict future versions of subframe one 42-1, then in optional step 684 the eight least significant bits of IODC in subframe one 42-1 are replaced by the IODE parameter from current subframe three 42-3 in order to keep the 10DC parameter in subframe one 42-1 as current as possible prior to receiving the next subframe one 42-1. Once the eight least significant bits of IODC in subframe one 42-1 are updated, all words in subframe one 42-1 have their parity bits recomputed using the parity algorithm. Upon completion of step 684, or when the subframe data flag for subframe one 42-1 is false, indicating there is not enough information to predict future versions of subframe one 42-1, the next step is 688, which returns to step 610 of subframe reception in flowchart 600.

Note that steps 678 through 684 are optional steps for updating subframes one 42-1 and two 42-2 after the data set period has changed by replacing the IODC parameter in subframe one 42-1 and the IODE parameter in subframe two 42-2 and recalculating the parity bits based on stored navigation data for subframes one 42-1 and two 42-2 and the new IODE parameter. That is, after steps 680 and 684 are executed, the updated navigation data bits and parity bits stored in computer memory for subframes one 42-1 and two 42-2 comprise navigation data bits from previously received subframes one 42-1 and two 42-2 in which the IODC and IODE parameters have been replaced with the current eight least significant bits of the IODE parameter in the currently received subframe three 42-3 (i.e. updated navigation data bits) and re-calculated parity bits based on the updated navigation data bits.

Step 692 begins the process of updating subframe four 42-4. Updating subframe four 42-4, as well as updating subframe five 42-5, involves updating local and global copies of pages one to twenty five for purposes of facilitating prediction of pages one to twenty five. For each satellite 12-$j$ in the visible set, copies of pages one to twenty five for subframes four 42-4 and five 42-5 are maintained. Such copies are the "local copies." Global copies are derived from the local copies. Specifically, the global copies of pages one to twenty five for subframes four 42-4 and five 42-5 are copies of the most current local copies of pages one to twenty five for subframes four 42-4 and five 42-5 for all the satellites in the visible set. For example, if the local copy of page three for subframe four 42-4 for satellite 12-3 in the visible set is the most current local copy of page three for subframe four 42-4 for any satellite 12-j in the visible set, the local copy of page three for subframe four 42-4 is included in the global copies as page three for subframe four 42-4 for all satellites 12-$j$ in the visible set.

The local copies for a particular satellite 12-$j$ are created when that satellite 12-$j$ joins or becomes part of the visible set. The global copies are created when the first local copies are created. The global copies may be updated whenever a page belonging to a satellite 12-$j$ in the visible set is received or some other time thereafter.

Returning to step 692, the page of current subframe four 42-4 is identified using the page ID parameter in word three 50-3 of subframe four 42-4. In step 694, local and global data flags for the identified page of subframe four 42-4 are set equal to true indicating there is enough information to predict future versions of that page of subframe four 42-4. In step 696, local and global copies of the identified page of previous subframe four 42-4, if any, are replaced with the page of current subframe four 42-4. Note that subframe four 42-4 does not have an IODC or IODE parameter to check, and subframe four 42-4 is merely replaced regardless of whether the data set period has changed. Note that, alternatively, step 696 may be eliminated if the data set period did not change (using the IODC or IODE parameter in subframes one 42-1, two 42-2 or three 42-3 to determine if the data set period changed) and if the local and global data flags for the identified page were false prior to step 694. Step 698 returns to step 610 of subframe reception in flowchart 600.

Step 693 begins the process of updating subframe five 42-5. In step 693, the page of current subframe five 42-5 is identified using the satellite ID parameter in word three 50-3 of subframe five 42-5. For instance, if the satellite ID parameter is equal to ten, then the page of subframe five 42-5 is ten. In step 695, local and global data flags for the identified page of subframe five 42-5 are set equal to true, indicating there is enough information to predict future versions of that page of subframe five 42-5. In step 697, local and global copies of the identified page of previous subframe five 42-5, if any, are replaced with the page of current subframe five 42-5. Note that subframe five 42-5 does not have an IODC or IODE parameter to check, and subframe five 42-5 is merely replaced regardless of whether the data set period has changed. Note that, alternatively, step 697 may be eliminated if the data set period did not change (using the IODC or IODE parameter in subframes one 42-1, two 42-2 or three 42-3 to determine if the data set period changed) and if the local and global data flags for local and global copies of the identified page were false prior to step 695. Step 699 returns to step 610 of subframe reception in flowchart 600.

The data collected via the receive subframe program and the subframe updating program is used to predict future navigation data. The present invention is capable of predicting any size segments of future navigation data if the appropriate navigation data has been received. For example, the present invention may predict subframes, words or bit streams of future navigation data. For illustrative purposes, the present invention will be described herein with respect to predicting subframes of future navigation data (hereinafter referred to as "subframe prediction"). This should not be construed to limit the present invention in any manner.

Subframe prediction involves first determining which subframe(s) is to be predicted for which satellite 12-$j$. If there is enough data to perform prediction (i.e. data flag(s) is set to true for that subframe for satellite 12-$j$), then words one 50-1 through ten 50-10 can be predicted for that subframe 42-$q$.

In one embodiment, the present invention predicts a future subframe (hereinafter referred to as a "prediction subframe") using a current subframe (e.g. currently received subframe), a previous version of the current subframe (hereinafter referred to as a "previous version subframe"), and a previous version of the subframe to be predicted (hereinafter referred to as a "template subframe"). FIG. 9 depicts an example illustrating the relationships between the aforementioned subframes. In FIG. 9, subframe 90 is current subframe C; subframe 92 is previous version subframe B; subframe 96 is template subframe Y; and subframe 94 is prediction subframe Z. For example, if prediction subframe Z is subframe four 42-4, then template subframe Y is a previously received subframe four 42-4; if current subframe C is subframe three 42-3, then previous version subframe B is a previously received subframe three 42-3. It should be understood that the prediction subframe does not have to be the immediately succeeding subframe of current subframe C.

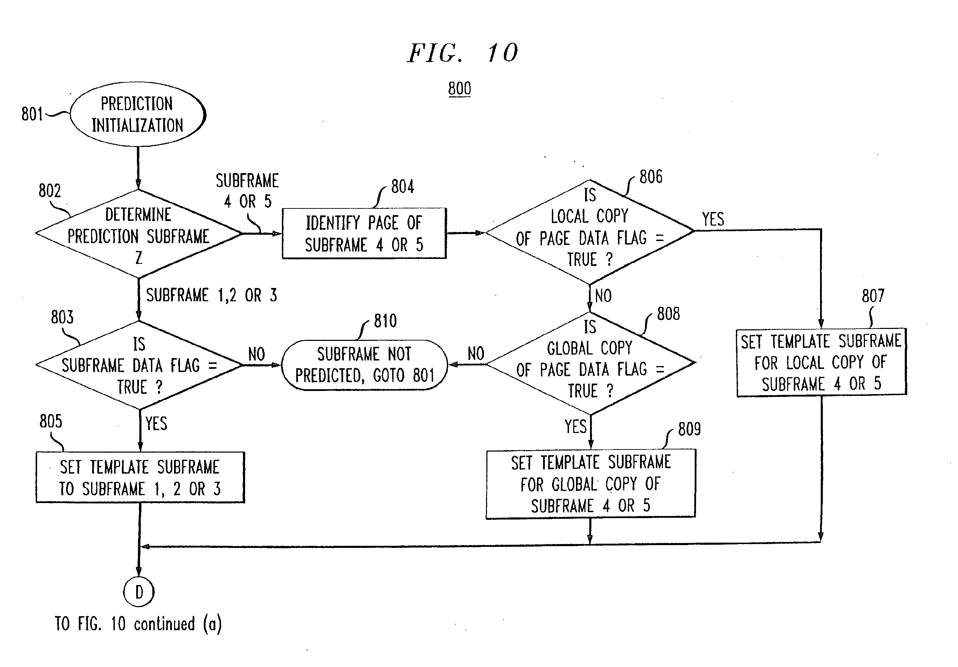

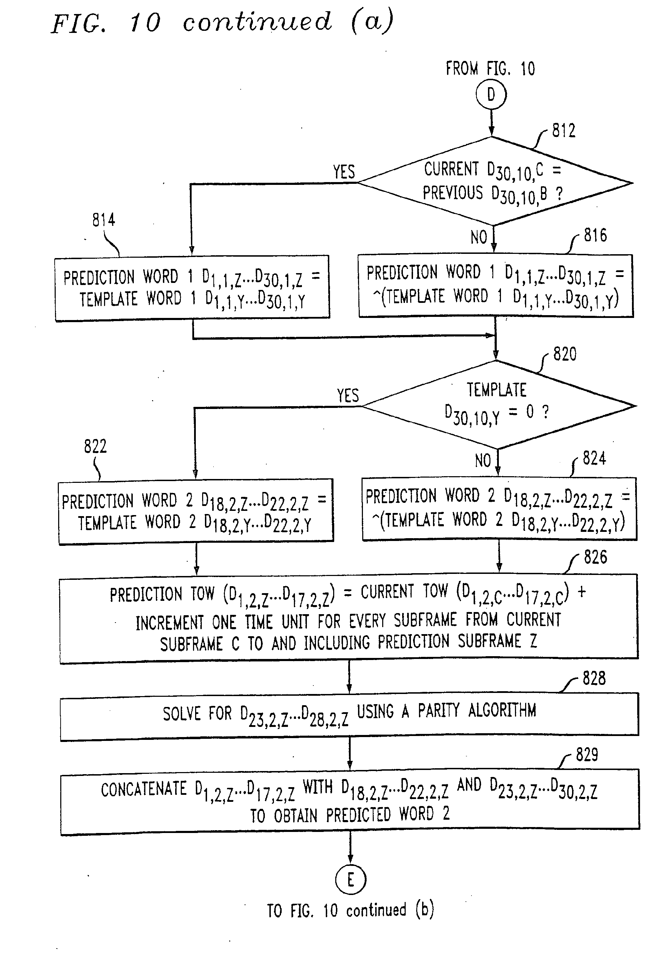

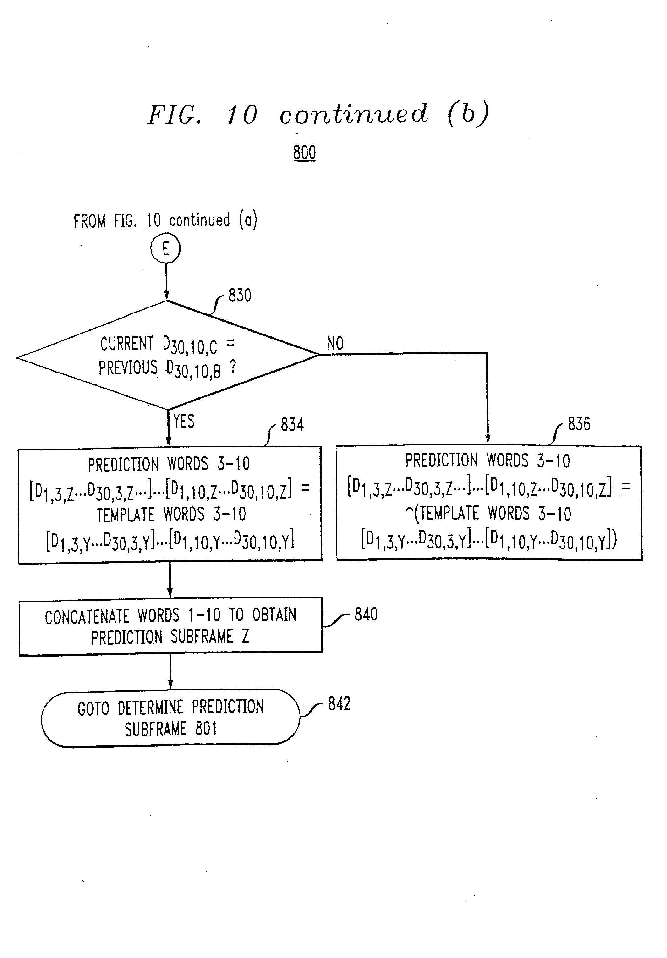

FIG. 10 is flowchart 800 illustrating a subframe prediction program in accordance with one embodiment of the present invention for predicting a subframe. Note that the subframe prediction program could be modified to predict one word, multiple subframes, a bit stream of navigation data ND-*j*, etc.

In step 801, the subframe prediction program is initialized. In step 802, prediction subframe Z is determined. Determining which subframe is to be prediction subframe Z can be achieved in a variety of manners. For example, prediction subframe Z can be the subframe after current subframe C, a requested subframe, etc.

If prediction subframe Z is subframe four 42-4 or five 42-5, the next step is 804. In step 804, the page of subframe four 42-4 or five 42-5 is identified, as mentioned earlier, by examining the page ID parameter or satellite ID parameter, respectively. In step 806, the local data flag for the page of the subframe corresponding to prediction subframe Z or template subframe Y is checked. For example, if page six of subframe four 42-4 is prediction subframe Z, then the local data flag for page six of subframe four 42-4 is checked. If the local data flag is true, indicating prediction is possible using the local copy of the page for subframe four 42-4 or five 42-5, step 807 is next. In step 807, the local copy of the page for subframe four 42-4 or five 42-5 (depending on the particular subframe being predicted) is set to be template subframe Y from which prediction subframe Z is to be determined. For example, if prediction subframe Z corresponds to subframe four 42-4, then a local copy of subframe four 42-4 is set to be template subframe Y. If the local data flag is false, indicating prediction is not possible using the local copy of the page for subframe four 42-4 or five 42-5, step 808 is next. In step 808, the local data flag for the page of the subframe corresponding to prediction subframe Z or template subframe Y, is checked. If the global data flag is true, indicating prediction is possible using the global copy of the page for subframe four 42-4 or five 42-5, step 809 is next. In step 809, the global copy of the page of subframe four 42-4 or five 42-5 is set to be template subframe Y from which prediction subframe Z is to be determined. If the global data flag is false, indicating prediction is not possible using the global copy of the page for subframe four 42-4 or five 42-5, the subframe prediction program returns to step 801 via step 810.

If prediction subframe Z is subframe one 42-1, two 42-2 or three 42-3, the next step after step 802 is step 803. In step 803, the subframe data flag corresponding to prediction subframe Z or template subframe Y is checked. For example, if subframe two 42-2 is prediction subframe Z, then the subframe data flag for subframe two 42-2 is checked. If the subframe data flag is true indicating prediction of prediction subframe Z is possible, step 805 is next. In step 805, subframe one 42-1, two 42-2 or three 42-3 (depending on prediction subframe Z) is set to be template subframe Y from which prediction subframe Z is determined. If the subframe data flag is false indicating prediction is not possible, the next step is 810. In step 810, prediction subframe Z is not predicted and the subframe prediction program returns to step 801.

Step 812 begins the process of predicting word one 50-1 of prediction subframe Z. Current subframe C is compared to previous version subframe B to determine whether navigation data ND-*j* has been complemented. For ease of discussion, specific bits will hereinafter be referenced using the following nomenclature: $D_{bit,word,subframe}$. For example, bit $D_{30.10.C}$ references the thirtieth bit of word ten 42-10 of current subframe C, whereas bit $D_{28.2.Y}$ references the twenty-eighth bit of word two 42-2 of template subframe Y. Specifically, in step 812, parity bit $D_{30.10.C}$ is compared to parity bit $D_{30.10.B}$. If parity bit $D_{30.10.C}$ is equal to parity bit $D_{30.10.B}$, indicating current subframe C is an uncomplemented version of previous version subframe B, then word one 50-1 of prediction subframe Z is set equal to word one 50-1 of template subframe Y, in step 814. If parity bit $D_{30.10.C}$ is not equal to parity bit $D_{30.10.B}$, indicating current subframe C is a complemented version of previous version subframe B, then word one 50-1 of prediction subframe Z is set equal to the complement of word one 50-1 of template subframe Y, in step 816.

In step 820, which begins the process of predicting word two 50-2 of prediction subframe Z, parity bit $D_{30.10.Y}$ is checked to determine whether navigation data ND-j of template subframe Y has been complemented. If parity bit $D_{30.10.Y}$ is a logical 0, indicating template subframe Y is uncomplemented, then navigation data bits $D_{18.2.Z} ... D_{22.2.Z}$ are set equal to navigation data bits $D_{18.2.Y}...D_{22.2.Y}$ in step 822. If parity bit $D_{30.10.Y}$ is a logical 1 indicating template subframe Y is complemented, then navigation data bits $D_{18.2.Z}...D_{22.2.Z}$ are set equal to the complement of navigation data bits $D_{18.2.Y}...D_{22.2.Y}$ in step 824. In step 826, navigation data bits $D_{1.2.Z}...D_{17.2.Z}$, corresponding to the TOW message, are set equal to navigation data bits $D_{1.2.C}...D_{17.2.C}$ and then incremented one time unit for every subframe from current subframe C to and including prediction subframe Z. For example, if prediction subframe Z is the subframe immediately succeeding current subframe C, as shown in the example of FIG. 9, the TOW message in current subframe C is incremented one time unit. In step 828, supplemental parity bits $D_{23.2.Z}$ and $D_{24.2.Z}$ and parity bits $D_{25.2.Z}...D_{28.2.Z}$ are predicted according to a parity algorithm.

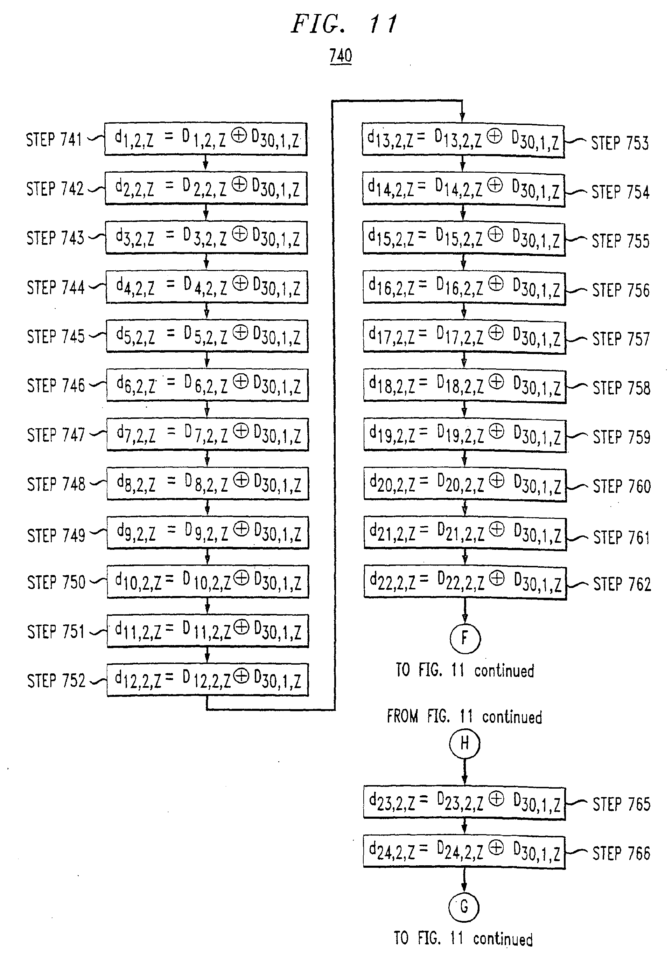

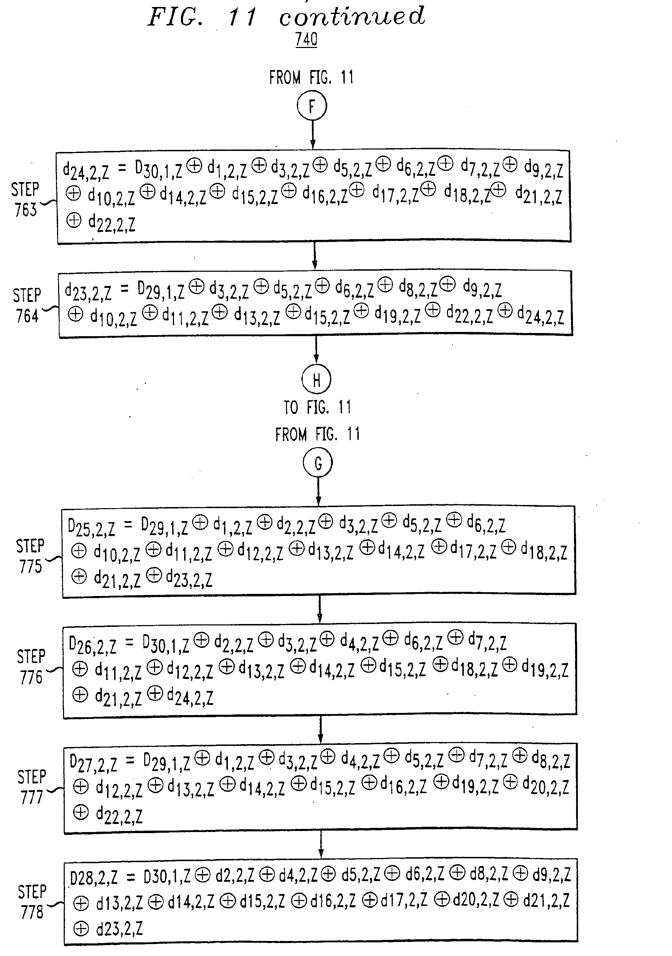

FIG. 11 depicts flowchart 740 of a parity algorithm used in accordance with one embodiment of the present invention for calculating supplemental parity bits $D_{23.2.Z}$ and $D_{24.2.Z}$, and parity bits $D_{25.2.Z}... D_{28.2.Z}$. Flowchart 740 depicts a manner of determining supplemental parity bits $D_{23.2.Z}$ and $D_{24.2.Z}$ and parity bits $D_{25.2.Z}...D_{28.2.Z}$ using navigation data bits $D_{1 \cdot 2.Z}...D_{22.2.Z}$, parity bits $D_{29.2.Z}$ and $D_{30.2.Z}$ and parity bits $D_{29.1.Z}$ and $D_{30.1.Z}$. Recall that parity bits $D_{29.2.Z}$ and $D_{30.2.Z}$ are always set to zero. A modulo two sum operation is performed in step 741 between navigation data bit $D_{1.2.Z}$ and parity bit $D_{30.1.Z}$. The modulo two sum of navigation data bit $D_{1.2.Z}$ and parity bit $D_{30.1.Z}$ is represented by $d_{1.2.Z}$. Likewise, in steps 742...762, modulo two sums operations are performed between the next navigation data bits (i.e. $D_{2.2.Z}$, $D_{3.2.Z}$, . . . $D_{24.2.Z}$) and parity bit $D_{30.1.Z}$ to obtain the modulo two sums (i.e. $d_{2.2.Z}$, $d_{3.2.Z}$, ...$d_{24.2.Z}$).

In step 763, modulo two sum operations are performed between $D_{30.1.Z}$, $d_{1.2.Z}$, $d_{3.2.Z}$, $d_{5.2.Z}$, $d_{6.2.Z}$, $d_{7.2.Z}$, $d_{9.2.Z}$, $d_{10.2.Z}$, $d_{14.2.Z}$, $d_{15.2.Z}$, $d_{16.2.Z}$, $d_{17.2.Z}$, $d_{18.2.Z}$, $d_{21.2.Z}$ and $d_{22.2.Z}$ to obtain $d_{24.2.Z}$. In step 764, modulo two sum operations are performed between $D_{29.1.Z}$, $d_{3.2.Z}$, $d_{5.2.Z}$, $d_{6.2.Z}$, $d_{8.2.Z}$, $d_{9.2.Z}$, $d_{10.2.Z}$, $d_{11.2.Z}$, $d_{13.2.Z}$, $d_{15.2.Z}$, $d_{19.2.Z}$, $d_{22.2.Z}$ and $d_{24.2.Z}$ to obtain $d_{23.2.Z}$. In step 765, a modulo two sum operation is performed between $d_{23.2.Z}$ and $D_{30.1.Z}$ to obtain $D_{23.2.Z}$. In step 766, a modulo two sum operation is performed between $d_{24.2.Z}$ and $D_{30.1.Z}$ to obtain $D_{24.2.Z}$. In step 775, modulo two sum operations are performed between $D_{29.1.Z}$, $d_{1.2.Z}$, $d_{2.2.Z}$, $d_{3.2.Z}$, $d_{5.2.Z}$, $d_{6.2.Z}$, $d_{10.2.Z}$, $d_{11.2.Z}$, $d_{12.2.Z}$, $d_{13.2.Z}$, $d_{14.2.Z}$, $d_{17.2.Z}$, $d_{18.2.Z}$, $d_{20.2.Z}$ and $d_{23.2.Z}$ to obtain $D_{25.2.Z}$. In step 776, modulo two sum operations are performed between $D_{30.1.Z}$, $d_{2.2.Z}$, $d_{3.2.Z}$, $d_{4.2.Z}$, $d_{6.2.Z}$, $d_{7.2.Z}$, $d_{11.2.Z}$, $d_{12.2.Z}$, $d_{13.2.Z}$, $d_{14.2.Z}$, $d_{15.2.Z}$, $d_{18.2.Z}$, $d_{19.2.Z}$, $d_{21.2.Z}$ and $d_{24.2.Z}$ to obtain $D_{26.2.Z}$. In step 777, modulo two sum operations are performed between $D_{29.1.Z}$, $d_{1.2.Z}$, $d_{3.2.Z}$, $d_{4.2.Z}$, $d_{5.2.Z}$, $d_{7.2.Z}$, $d_{8.2.Z}$, $d_{12.2.Z}$, $d_{13.2.Z}$, $d_{14.2.Z}$, $d_{15.2.Z}$, $d_{16.2.Z}$, $d_{19.2.Z}$, $d_{20.2.Z}$ and $d_{22.2.Z}$ to obtain $D_{27.2.Z}$. In step 778, modulo two sum operations are performed between $D_{30.1.Z}$, $d_{2.2.Z}$, $d_{4.2.Z}$, $d_{5.2.Z}$, $d_{6.2.Z}$, $d_{8.2.Z}$, $d_{9.2.Z}$, $d_{13.2.Z}$, $d_{14.2.Z}$, $d_{15.2.Z}$, $d_{16.2.Z}$, $d_{17.2.Z}$, $d_{20.2.Z}$, $d_{21.2.Z}$ and $d_{23.2.Z}$ to obtain $D_{28.2.Z}$. $D_{29.2.Z}$ and $D_{30.2.Z}$ are zero, as mentioned earlier.

Returning to FIG. 10, navigation data bits $D_{1.2.Z}... D_{17.2.Z}$, navigation data bits $D_{18.2.Z}... D_{22.2.Z}$, supplemental parity bits $D_{23.2.Z}$ and $D_{24.2.Z}$, and parity bits $D_{25.2.Z}...D_{30.2.Z}$ are concatenated, in step 829, to form word two 50-2 for prediction subframe Z. Next, step 830 begins the process of predicting words three 50-3 through ten 50-10 of prediction subframe Z. Current subframe C is compared to previous version subframe B to determine whether navigation data ND-$j$ of current subframe C has been complemented. Specifically, parity bit $D_{30.10.C}$ is compared to parity bit $D_{30.10.B}$. If parity bit $D_{30.10.C}$ is equal to parity bit $D_{30.10.B}$, indicating current subframe C is an uncomplemented version of previous version subframe B, then words three 50-3 through ten 50-10 of prediction subframe Z are set equal to words three 50-3 through ten 50-10 of template subframe Y in step 834. If parity bit $D_{30.10.C}$ is not equal to parity bit $D_{30.10.B}$, indicating current subframe C is a complemented version of previous version subframe B, then words three 50-3 through ten 50-10 of prediction subframe Z are set equal to the complement of words three 50-3 through ten 50-10 of template subframe Y in step 836. Words one 50-10 through ten 50-10 are concatenated in step 840 to form prediction subframe Z. In step 842, the subframe prediction program returns to step 801 to predict a next prediction subframe Z+1.

One or more prediction subframes Z can be stored and used to create the predicted future navigation data to be transmitted to WAG client 240, along with the action time, for purposes of performing data wipe, wherein the predicted future navigation data may comprise one or more prediction subframes Z or portions thereof. For example, the predicted future navigation data comprises the second through eighth words of prediction subframe Z, two consecutive prediction subframes Z, a portion of one prediction subframe Z and the entire immediately succeeding prediction subframe Z, etc.

In the second part of the description of the present invention, time aligning the predicted future navigation data to the data to be wiped off is achieved using the action time. The action time will indicate when the predicted future navigation data should be applied to a received GPS signal 14-$j$ transmitted from a particular satellite 12-$j$ for purposes of wiping off navigation data in the received GPS signal 14-$j$. In one embodiment, the action time indicates an approximate start arrival time at WAG client 240 of a reference bit of navigation data transmitted via GPS signal 14-$j$ from a particular satellite 12-$j$, wherein the reference bit corresponds to a starting or first bit of the predicted future navigation data. Thus, at the action time, data wipeoff begins at WAG client 240 by applying the predicted future navigation data (starting with the starting bit) to received GPS signal 14-$j$ transmitted from satellite 12-$j$ such that the starting bit of the predicted future navigation data wipes off the reference bit of the navigation data being received via GPS signal 14-$j$, the second bit of the predicted future navigation data wipes off the bit immediately following the reference bit of the navigation data being received via GPS signal 14-$j$, etc.

In one embodiment, an estimated action time is used to determine the action time and reference bit (and starting bit), wherein the estimated action time is some time in the future during which the reference bit will be transmitted at satellite 12-$j$. The estimated action time being based on a request from a mobile-station or some system parameter. Note the differences between the estimated action time and the action time. The estimated action time indicates a time during which the reference bit will be transmitted at satellite 12-$j$, and not necessarily a time at which the reference bit will begin transmission at satellite 12-$j$.. By contrast, the action time is the approximate time at which the reference bit (transmitted by satellite 12-$j$) should begin arriving at WAG client 240 in accordance with one embodiment of the present invention.

FIG. 12 depicts a flowchart 1000 illustrating a manner of determining the action time at WAG server 220 in accordance with this embodiment of the present invention. In step 1010, WAG server 220 determines the time of week count using current subframe C which, as mentioned earlier, indicates the start transmission time of the immediately succeeding subframe at satellite 12-j (from which current subframe C was transmitted). Specifically, the TOW message in current subframe C is extracted to determine the time of week count.

In step 1020, the integer number of bits between the beginning of current subframe C and an estimated action time (hereinafter referred to as "bit difference") is determined. If the time unit for each subframe is six seconds and the estimated action time is expressed in terms of a time of week in GPS time, then the bit difference can be determined using the following equation:

$$\text{bit difference} = \text{int}[\frac{\text{estimated action time - (TOW-1)} \times \text{(6 seconds / time unit)}}{\text{20 milliseconds/ bit}}] \qquad \text{equation 1}$$

In step 1030, the integer number of subframes between the beginning of current subframe C and the estimated action time is determined using the bit difference (hereinafter referred to as "subframe difference"). Specifically, the subframe difference is determined using the following equation:

$$\text{subframe difference} = \text{int}[\frac{\text{bit difference}}{\text{300 bits/ subframe}}] \qquad \text{equation 2}$$

In step 1040, the reference bit is determined in terms of a particular bit in the subframe to which it belongs using the following equation, wherein the subframe to which the reference bit belongs is $Y$ subframes after current subframe C and $Y$ being equal to the subframe difference:

$$\text{reference bit = bit difference modulo 300} \qquad \text{equation 3}$$

For example, the reference bit is the forty-first bit (out of three hundred bits) in the subframe.

In step 1050, the transmission time of the reference bit $\text{Tx}_{\text{reference bit}}$ at satellite 12-j is determined using the subframe difference and reference bit. Note that the transmission time of the reference bit indicates, in one embodiment, the begin transmission time of the reference bit. Further note that the transmission time of the reference bit should be the same at all satellites 12-j (assuming each satellite 12-j is properly calibrated to GPS time). That is, for example, the fourth bit of word one of the fourth subframe after current subframe C is transmitted at the same time at all satellites 12-j. If the time unit for each subframe is six seconds, the reference bit transmission time $\text{Tx}_{\text{reference bit}}$ is determined using the following equation:

$$\text{Tx}_{\text{referencebit}} = [(\text{TOW - 1)} + \text{(subframe difference)}] \times \text{(6 seconds / time unit)}$$

$$+ \text{(reference bit)} \times \text{(20 milliseconds/ bit)} \qquad \text{equation 4}$$

In step 1060, the action times of the reference bit $AT_j$ is determined for one or more visible satellites 12-j using the reference bit transmission time $\text{Tx}_{\text{reference bit}}$ and pseudo-ranges (or propagation delays) associated with satellites 12-j, wherein the manners in which the pseudo-ranges are determined are well-known in the art. Specifically, the reference bit action times $AT_j$ are determined using the following equation:

$$AT_j = \text{Tx}_{\text{reference bit}} + \text{pseudo - range for satellite 12-}j \qquad \text{equation 5}$$

Note that the pseudo-ranges for the visible satellites 12-j may be estimated based on a position of WAG server 220, a position of a base station or equivalent entity providing communication services to WAG client 240, a position of a sector in which WAG client 240 is located, a reference position of the sector in which WAG client 240 is located, an estimated position of WAG client 240, etc.

Upon determining one or more reference bit action times $AT_j$, WAG server 220 transmits a data wipeoff message to WAG client 240, wherein the data wipeoff message includes the reference bit action times $AT_j$ and associated predicted future navigation data for each visible satellite 12-j. The predicted future navigation data having a starting or first bit corresponding to the reference bit and preferably based on prediction subframes Z for associated visible satellites 12-*j* - that is, if the reference bit is the eighty-fourth bit in the subframe being transmitted, then the starting or first bit of the predicted future navigation data would be the eighty-fourth bit of the same corresponding subframe. The data wipeoff message may further include satellite indicators, such as a PN-*j* code, for identifying the visible satellites 12-*j* to which the predicted future navigation data and reference bit action times A T$_j$ are associated such that the predicted future navigation data are only used to perform data wipeoff of navigation data ND-*j* in GPS signals 14-*j* transmitted by the identified satellites 12-*j*. Upon receiving data wipeoff message, WAG client 240 performs data wipeoff at the reference bit action times AT$_j$ using the associated predicted future navigation data.

The present invention is described herein with reference to certain embodiments. Other embodiments are possible. For example, a copy of the TLM message may be stored separately from other previously received navigation data in order to simplify updating the TLM message and reduce storage space by keeping one copy of the TLM message for all satellite navigation data ND-*j*. In addition, storage of parity bits for each word 50-p is not necessary since the parity bits can be recalculated according to the algorithm described in FIG. 6. It should be noted that other methods for determining action times and reference bits are also possible. Accordingly, the present invention should not be limited to the embodiments disclosed herein.

**Claims**

1. A method of enhancing data wipeoff **CHARACTERIZED BY** the steps of:

    performing parity check (612) on a current subframe transmitted from a satellite;
    discarding the current subframe (616) if the parity check fails; and
    updating previously received data (620) associated with the satellite using the current subframe to produce updated data; and
    predicting future navigation data (800) using the updated data.

2. The method of claim 1, wherein the step of updating previously received data is FURTHER **CHARACTERIZED BY** the step of:

    replacing a previous TLM (624) belonging to the previously received data with a current TLM belonging to the current subframe if the current TLM is not identical to the previous TLM.

3. The method of claim 1, wherein the step of updating previously received data is FURTHER **CHARACTERIZED BY** the step of:

    determining a subframe number (626) for the current subframe if a current TLM belonging to the current subframe is not identical to a previous TLM belonging to the previously received data.

4. The method of claim 3, wherein the step of updating previously received data is FURTHER **CHARACTERIZED BY** the step of:

    replacing a previous subframe (636, 656, 676, 696, 697) associated with the subframe number using the current subframe.

5. The method of claim 1, wherein the step of predicting future navigation data is FURTHER **CHARACTERIZED BY** the step of:

    determining an action time (1000) for indicating when to apply predicted future navigation data to a received signal at a receiver;
    transmitting the action time and the predicted future navigation data to the receiver.

6. The method of claim 5, wherein the step of predicting future navigation data is FURTHER **CHARACTERIZED BY** the action time indicating when a reference bit (1060) in the received signal will start to arrive at the receiver, the reference bit corresponding to a particular bit in the predicted future navigation data.

7. The method of claim 6, wherein the step of predicting future navigation data is FURTHER **CHARACTERIZED BY** the step of:

determining a transmission time (1050) for the reference bit using a propagation delay associated with the received signal traveling from a satellite from which the received signal was transmitted to the receiver.

**8.** The method of claim 1, wherein the step of predicting future navigation data is FURTHER **CHARACTERIZED BY** the step of:

determining a time of week count (1010) using a time of week message in the current subframe.

**9.** The method of claim 8, wherein the step of predicting future navigation data is FURTHER **CHARACTERIZED BY** the step of:

determining a bit difference (1020) between a beginning of the current subframe and an estimated action time, wherein the estimated action time indicates a time during which a reference bit in the predicted future navigation data will be transmitted, the reference bit corresponding to a particular bit in the predicted future navigation data, the estimated action time being the action time.

**10.** The method of claim 9, wherein the step of predicting future navigation data is FURTHER **CHARACTERIZED BY** the step of:

determining a subframe difference (1030) between the beginning of the current subframe and the estimated action time using the bit difference.

FIG. 1

| | SUBFRAME 1 | SUBFRAME 2 | SUBFRAME 3 | SUBFRAME 4 | SUBFRAME 5 |
|---|---|---|---|---|---|
| | ⌐42-1 | ⌐42-2 | ⌐42-3 | ⌐42-4 | ⌐42-5 |
| 40-1 | CLOCK & OTHER PARAMETERS | EPHEMERIS | EPHEMERIS | ****** | ALMANAC (SV 1) |
| 40-2 | | | | ALMANAC (SV 25) ₩ | ALMANAC (SV 2) |
| 40-3 | | | | ALMANAC (SV 26) ₩ | ALMANAC (SV 3) |
| 40-4 | | | | ALMANAC (SV 27) ₩ | ALMANAC (SV 4) |
| 40-5 | | | | ALMANAC (SV 28) ₩ | ALMANAC (SV 5) |
| 40-6 | | | | ****** | ALMANAC (SV 6) |
| 40-7 | | | | ALMANAC (SV 29) ₩ | ALMANAC (SV 7) |
| 40-8 | | | | ALMANAC (SV 30) ₩ | ALMANAC (SV 8) |
| 40-9 | | COMPLETE NAVIGATION | | ALMANAC (SV 31) ₩ | ALMANAC (SV 9) |
| 40-10 | | DATA SET = 25 FRAMES | | ALMANAC (SV 32) ₩ | ALMANAC (SV 10) |
| 40-11 | | = 37,500 BITS | | ****** | ALMANAC (SV 11) |
| 40-12 | | | | ++++++ | ALMANAC (SV 12) |
| 40-13 | | | | ~~~~~~ | ALMANAC (SV 13) |
| 40-14 | | | | ^^^^^^ | ALMANAC (SV 14) |
| 40-15 | | | | ^^^^^^ | ALMANAC (SV 15) |
| 40-16 | | | | ****** | ALMANAC (SV 16) |
| 40-17 | | | | ^^^^^^ | ALMANAC (SV 17) |
| 40-18 | | | | ...... | ALMANAC (SV 18) |

FRAME 40-s

## FIG. 1 *Continued*

| | |
|---|---|
| ++++++ | ALMANAC (SV 19) |
| ++++++ | ALMANAC (SV 20) |
| ****** | ALMANAC (SV 21) |
| ++++++ | ALMANAC (SV 22) |
| ++++++ | ALMANAC (SV 23) |
| ++++++ | ALMANAC (SV 24) |
| //////// | SATELLITE HEALTH (SV 0) |

40-19
40-20
40-21
40-22
40-23
40-24
40-25

COMPLETE NAVIGATION
DATA SET = 25 FRAMES
= 37,500 BITS

NAVIGATION DATA SET 38

***    RESERVED DATA (PAGES 1, 6, 11, 16, 21). NOTE THAT THESE CONTAIN THE SAME DATA IN SUBFRAME 4.

vvv    ALMANAC DATA FOR SATELLITES 25-32 OR RESERVED DATA IF SATELLITE ID ≠ 25-32 (PAGES 2-5, 7-10).

+++    RESERVED DATA (PAGES 12, 19, 20 22-24). IN SUBFRAME 4 PAGES 12 & 24 HAVE THE SAME DATA.

···    SOME ALMANAC DATA PLUS IONOSPHERIC CORRECTION PARAMETERS.

~~~    ESTIMATED RANGE DETECTION (ERD) IN THE NAVIGATION MESSAGE CORRECTION TABLE (PAGE 13).

///    ANTI-SPOOF, SATELLITE CONFIGURATION AND HEALTH (PAGE 25).

^^^    RESERVED DATA (PAGES 14, 15, 17).

EP 1 365 254 A1

FIG. 2

EP 1 365 254 A1

|←————————————1 COMPLETE NAVIGATION DATA SET 38: 37,500 BITS————————————→|

40-2  40-4  40-6  40-8  40-10  40-12  40-14  40-16  40-18  40-20  40-22  40-24
40-1 ( 40-3 ( 40-5 ( 40-7 ( 40-9 ( 40-11 ( 40-13 ( 40-15 ( 40-17 ( 40-19 ( 40-21 ( 40-23 ( 40-25

| FRAME 1 | FRAME 2 | FRAME 3 | FRAME 4 | FRAME 5 | FRAME 6 | FRAME 7 | FRAME 8 | FRAME 9 | FRAME 10 | FRAME 11 | FRAME 12 | FRAME 13 | FRAME 14 | FRAME 15 | FRAME 16 | FRAME 17 | FRAME 18 | FRAME 19 | FRAME 20 | FRAME 21 | FRAME 22 | FRAME 23 | FRAME 24 | FRAME 25 |

|←————————————————1 FRAME 40-s: 1500 BITS————————————————→|

|  42-1  |  42-2  |  42-3  |  42-4  |  42-5  |
| SUBFRAME 1 | SUBFRAME 2 | SUBFRAME 3 | SUBFRAME 4 | SUBFRAME 5 |

|←————————————1 SUBFRAME 42-q: 300 BITS————————————→|

| 50-1 | 50-2 | 50-3 | 50-4 | 50-5 | 50-6 | 50-7 | 50-8 | 50-9 | 50-10 |
| WORD 1 | WORD 2 | WORD 3 | WORD 4 | WORD 5 | WORD 6 | WORD 7 | WORD 8 | WORD 9 | WORD 10 |

|←————————————1 WORD 50-p: 30 BITS————————————→|

| BITS $D_1$ ... $D_{24}$ = NAVIGATION DATA | BITS $D_{25}$...$D_{30}$ = PARITY |

1 BIT 52-n

20 ms PERIOD

*FIG. 3*

WORD 1 (TLM WORD) 50-1

| PREAMBLE 1 0 0 0 1 0 1 1 | TLM MESSAGE | ① ① | PARITY |

BIT  1 2 3 4 5 6 7 8 9 10 11 12 13 14 15 16 17 18 19 20 21 22 23 24 25 26 27 28 29 30

① = RESERVED BIT

*FIG. 4*

WORD 2 (HAND OVER WORD) 50-2

SUPPLEMENTAL PARITY

PARITY

| TIME OF WEEK COUNT MESSAGE | ① ① | SUBFRAME ID | 0 | 0 | 0 |

BIT  1 2 3 4 5 6 7 8 9 10 11 12 13 14 15 16 17 18 19 20 21 22 23 24 25 26 27 28 29 30

① = RESERVED BIT

## FIG. 5

600

INITIALIZE PREDICTION SYSTEM — 601

SET DATA FLAGS FOR SUBFRAMES 1, 2 & 3 = FALSE FOR ALL SATELLITES 12-j — 602

SET DATA FLAGS FOR LOCAL AND GLOBAL COPIES OF PAGES 1-25 FOR SUBFRAMES 4 & 5 = FALSE FOR ALL SATELLITES 12-j — 604

608 — FROM SUBFRAME UPDATING PROGRAM

610 — RECEIVE CURRENT SUBFRAME FROM A SATELLITE

612 — PERFORM PARITY CHECK ON PARITY BITS IN WORDS 1-10 OF CURRENT SUBFRAME WITH PARITY ALGORITHMS

614 — DOES CURRENT SUBFRAME PASS PARITY CHECK ?

YES

615 — WHICH SATELLITE 12-j ?

NO

616 — DISCARD CURRENT SUBFRAME

617 — GOTO SUBFRAME UPDATING FOR CORRESPONDING SATELLITE 12-j

## FIG. 6

700

STEP 701 — $d_{1,p} = D_{1,p} \oplus D_{30,u}$

STEP 702 — $d_{2,p} = D_{2,p} \oplus D_{30,u}$

STEP 703 — $d_{3,p} = D_{3,p} \oplus D_{30,u}$

STEP 704 — $d_{4,p} = D_{4,p} \oplus D_{30,u}$

STEP 705 — $d_{5,p} = D_{5,p} \oplus D_{30,u}$

STEP 706 — $d_{6,p} = D_{6,p} \oplus D_{30,u}$

STEP 707 — $d_{7,p} = D_{7,p} \oplus D_{30,u}$

STEP 708 — $d_{8,p} = D_{8,p} \oplus D_{30,u}$

STEP 709 — $d_{9,p} = D_{9,p} \oplus D_{30,u}$

STEP 710 — $d_{10,p} = D_{10,p} \oplus D_{30,u}$

STEP 711 — $d_{11,p} = D_{11,p} \oplus D_{30,u}$

STEP 712 — $d_{12,p} = D_{12,p} \oplus D_{30,u}$

$d_{13,p} = D_{13,p} \oplus D_{30,u}$ — STEP 713

$d_{14,p} = D_{14,p} \oplus D_{30,u}$ — STEP 714

$d_{15,p} = D_{15,p} \oplus D_{30,u}$ — STEP 715

$d_{16,p} = D_{16,p} \oplus D_{30,u}$ — STEP 716

$d_{17,p} = D_{17,p} \oplus D_{30,u}$ — STEP 717

$d_{18,p} = D_{18,p} \oplus D_{30,u}$ — STEP 718

$d_{19,p} = D_{19,p} \oplus D_{30,u}$ — STEP 719

$d_{20,p} = D_{20,p} \oplus D_{30,u}$ — STEP 720

$d_{21,p} = D_{21,p} \oplus D_{30,u}$ — STEP 721

$d_{22,p} = D_{22,p} \oplus D_{30,u}$ — STEP 722

$d_{23,p} = D_{23,p} \oplus D_{30,u}$ — STEP 723

$d_{24,p} = D_{24,p} \oplus D_{30,u}$ — STEP 724

(A)

TO FIG. 6 continued

# *FIG. 6 continued*

<u>700</u>

FROM FIG. 6

(A)

STEP 725

$$D_{25,p} = D_{29,u} \oplus d_{1,p} \oplus d_{2,p} \oplus d_{3,p} \oplus d_{5,p} \oplus d_{6,p} \oplus d_{10,p} \oplus d_{11,p} \oplus d_{12,p} \oplus d_{13,p} \oplus d_{14,p} \oplus d_{17,p} \oplus d_{18,p} \oplus d_{20,p} \oplus d_{23,p}$$

STEP 726

$$D_{26,p} = D_{30,u} \oplus d_{2,p} \oplus d_{3,p} \oplus d_{4,p} \oplus d_{6,p} \oplus d_{7,p} \oplus d_{11,p} \oplus d_{12,p} \oplus d_{13,p} \oplus d_{14,p} \oplus d_{15,p} \oplus d_{18,p} \oplus d_{19,p} \oplus d_{21,p} \oplus d_{24,p}$$

STEP 727

$$D_{27,p} = D_{29,u} \oplus d_{1,p} \oplus d_{3,p} \oplus d_{4,p} \oplus d_{5,p} \oplus d_{7,p} \oplus d_{8,p} \oplus d_{12,p} \oplus d_{13,p} \oplus d_{14,p} \oplus d_{15,p} \oplus d_{16,p} \oplus d_{19,p} \oplus d_{20,p} \oplus d_{22,p}$$

STEP 728

$$D_{28,p} = D_{30,u} \oplus d_{2,p} \oplus d_{4,p} \oplus d_{5,p} \oplus d_{6,p} \oplus d_{8,p} \oplus d_{9,p} \oplus d_{13,p} \oplus d_{14,p} \oplus d_{15,p} \oplus d_{16,p} \oplus d_{17,p} \oplus d_{20,p} \oplus d_{21,p} \oplus d_{23,p}$$

STEP 729

$$D_{29,p} = D_{30,u} \oplus d_{1,p} \oplus d_{3,p} \oplus d_{5,p} \oplus d_{6,p} \oplus d_{7,p} \oplus d_{9,p} \oplus d_{10,p} \oplus d_{14,p} \oplus d_{15,p} \oplus d_{16,p} \oplus d_{17,p} \oplus d_{18,p} \oplus d_{21,p} \oplus d_{22,p} \oplus d_{24,p}$$

STEP 730

$$D_{30,p} = D_{29,u} \oplus d_{3,p} \oplus d_{5,p} \oplus d_{6,p} \oplus d_{8,p} \oplus d_{9,p} \oplus d_{10,p} \oplus d_{11,p} \oplus d_{13,p} \oplus d_{15,p} \oplus d_{19,p} \oplus d_{22,p} \oplus d_{23,p} \oplus d_{24,p}$$

*FIG. 7*

620

621 — ( SUBFRAME UPDATING FOR SATELLITE 12-j )

622 — CURRENT TLM = PREVIOUS TLM ? — YES

NO

624 — REPLACE PREVIOUS TLM WITH CURRENT TLM

626 — DETERMINE SUBFRAME NUMBER

( GOTO STEP 692 OR 693 )

SUBFRAME 1

(B) TO FIG. 7 continued (a)

632 — SET DATA FLAG FOR SUBFRAME 1 = TRUE

(C) TO FIG. 7 continued (b)

634 — CURRENT IODC = PREVIOUS IODC ? — YES

NO

636 — REPLACE PREVIOUS VERSION OF SUBFRAME 1 WITH CURRENT SUBFRAME

646 — REPLACE PREVIOUS VERSION OF SUBFRAME 1 WITH CURRENT SUBFRAME

638 — IS DATA FLAG FOR SUBFRAME 2 = TRUE ? — NO

YES

640 — REPLACE IODE IN SUBFRAME 2 WITH LEAST 8 BITS OF IODC AND RECALCULATE PARITY FOR WORDS 1-10 IN SUBFRAME 2

642 — IS DATA FLAG FOR SUBFRAME 3 = TRUE ? — NO

YES

644 — REPLACE IODE IN SUBFRAME 3 WITH LEAST 8 BITS OF IODC AND RECALCULATE PARITY FOR WORDS 1-10 IN SUBFRAME 3

( GOTO RECEIVE A CURRENT SUBFRAME 610 ) — 648

# FIG. 7 continued (a)
### 620

(B) FROM FIG. 7

652
SUBFRAME 2

**SET DATA FLAG FOR SUBFRAME 2 = TRUE**

654
CURRENT IODE = PREVIOUS IODE ? —— YES

656 ↓ NO

**REPLACE PREVIOUS VERSION OF SUBFRAME 2 WITH CURRENT SUBFRAME**

666
**REPLACE PREVIOUS VERSION OF SUBFRAME 2 WITH CURRENT SUBFRAME**

658
IS DATA FLAG FOR SUBFRAME 3 = TRUE ? —— NO

660 ↓ YES

**REPLACE IODE IN SUBFRAME 3 WITH IODE OF CURRENT SUBFRAME AND RECALCULATE PARITY FOR WORDS 1–10 IN SUBFRAME 3**

662
IS DATA FLAG FOR SUBFRAME 1 = TRUE ? —— NO

664 ↓ YES

**REPLACE LEAST 8 BITS OF IODC IN SUBFRAME 1 WITH IODE OF CURRENT SUBFRAME AND RECALCULATE PARITY FOR WORDS 1–10 IN SUBFRAME 1**

**GOTO RECEIVE A CURRENT SUBFRAME 610** — 668

24

# FIG. 7 continued (b)

620

(C) FROM FIG. 7

SUBFRAME 3

672 — SET DATA FLAG FOR SUBFRAME 3 = TRUE

674 — CURRENT IODE = PREVIOUS IODE ?

NO

676 — REPLACE PREVIOUS VERSION OF SUBFRAME 2 WITH CURRENT SUBFRAME

YES

686 — REPLACE PREVIOUS VERSION OF SUBFRAME 3 WITH CURRENT SUBFRAME

678 — IS DATA FLAG FOR SUBFRAME 2 = TRUE ?

NO

YES

680 — REPLACE IODE IN SUBFRAME 2 WITH IODE OF CURRENT SUBFRAME AND RECALCULATE PARITY FOR WORDS 1-10 IN SUBFRAME 2

682 — IS DATA FLAG FOR SUBFRAME 1 = TRUE ?

NO

YES

684 — REPLACE LEAST 8 BITS OF IODC IN SUBFRAME 1 WITH IODE OF CURRENT SUBFRAME AND RECALCULATE PARITY FOR WORDS 1-10 IN SUBFRAME 1

GOTO RECEIVE A CURRENT SUBFRAME 610 — 688

## FIG. 8

```
                    ┌─────────────┐
                    │   FROM      │
                    │  STEP 626   │ SUBFRAME 4              SUBFRAME 5
                    └─────────────┘
```

692 — DETERMINE PAGE NUMBER OF CURRENT SUBFRAME 4

693 — DETERMINE PAGE NUMBER OF CURRENT SUBFRAME 5

694 — SET DATA FLAGS FOR LOCAL AND GLOBAL COPIES OF THE PAGE FOR SUBFRAME 4 = TRUE

695 — SET DATA FLAGS FOR LOCAL AND GLOBAL COPIES OF THE PAGE FOR SUBFRAME 5 = TRUE

696 — REPLACE PREVIOUS VERSION OF SUBFRAME 4 WITH CURRENT SUBFRAME 4 IN LOCAL AND GLOBAL COPIES OF PAGE FOR SUBFRAME 4

697 — REPLACE PREVIOUS VERSION OF SUBFRAME 5 WITH CURRENT SUBFRAME 5 IN LOCAL AND GLOBAL COPIES OF PAGE FOR SUBFRAME 5

698 — GOTO RECEIVE A CURRENT SUBFRAME 610

699 — GOTO RECEIVE A CURRENT SUBFRAME 610

## FIG. 9

| 92 | 96 | | | | 90 | 94 |
|---|---|---|---|---|---|---|
| PREVIOUS VERSION SUBFRAME B OF CURRENT SUBFRAME C | TEMPLATE SUBFRAME Y FOR PREDICTION SUBFRAME Z | SUBFRAME | SUBFRAME | SUBFRAME | CURRENT SUBFRAME C | PREDICTION SUBFRAME Z |

T

## FIG. 10

<u>800</u>

TO FIG. 10 continued (a)

EP 1 365 254 A1

*FIG. 10 continued (a)*

FROM FIG. 10

(D)

812

CURRENT $D_{30,10,C}$ =
PREVIOUS $D_{30,10,B}$ ?

YES → 

NO → 816

**814**

PREDICTION WORD 1 $D_{1,1,Z}...D_{30,1,Z}$ =
TEMPLATE WORD 1 $D_{1,1,Y}...D_{30,1,Y}$

**816**

PREDICTION WORD 1 $D_{1,1,Z}...D_{30,1,Z}$ =
$^\wedge$(TEMPLATE WORD 1 $D_{1,1,Y}...D_{30,1,Y}$)

820

TEMPLATE
$D_{30,10,Y}$ = 0 ?

YES →

NO → 824

**822**

PREDICTION WORD 2 $D_{18,2,Z}...D_{22,2,Z}$ =
TEMPLATE WORD 2 $D_{18,2,Y}...D_{22,2,Y}$

**824**

PREDICTION WORD 2 $D_{18,2,Z}...D_{22,2,Z}$ =
$^\wedge$(TEMPLATE WORD 2 $D_{18,2,Y}...D_{22,2,Y}$)

**826**

PREDICTION TOW $(D_{1,2,Z}...D_{17,2,Z})$ = CURRENT TOW $(D_{1,2,C}...D_{17,2,C})$ +
INCREMENT ONE TIME UNIT FOR EVERY SUBFRAME FROM CURRENT
SUBFRAME C TO AND INCLUDING PREDICTION SUBFRAME Z

**828**

SOLVE FOR $D_{23,2,Z}...D_{28,2,Z}$ USING A PARITY ALGORITHM

**829**

CONCATENATE $D_{1,2,Z}...D_{17,2,Z}$ WITH $D_{18,2,Z}...D_{22,2,Z}$ AND $D_{23,2,Z}...D_{30,2,Z}$
TO OBTAIN PREDICTED WORD 2

(E)

TO FIG. 10 continued (b)

# FIG. 10 continued (b)

800

FROM FIG. 10 continued (a)

(E)

830

CURRENT $D_{30,10,C}$ = PREVIOUS $D_{30,10,B}$ ?

NO

YES

834

PREDICTION WORDS 3–10
$[D_{1,3,Z}...D_{30,3,Z}...]...[D_{1,10,Z}...D_{30,10,Z}]$ = TEMPLATE WORDS 3–10
$[D_{1,3,Y}...D_{30,3,Y}]...[D_{1,10,Y}...D_{30,10,Y}]$

836

PREDICTION WORDS 3–10
$[D_{1,3,Z}...D_{30,3,Z}...]...[D_{1,10,Z}...D_{30,10,Z}]$ = ^(TEMPLATE WORDS 3–10
$[D_{1,3,Y}...D_{30,3,Y}]...[D_{1,10,Y}...D_{30,10,Y}]$)

840

CONCATENATE WORDS 1–10 TO OBTAIN PREDICTION SUBFRAME Z

842

GOTO DETERMINE PREDICTION SUBFRAME 801

## FIG. 11

<u>740</u>

STEP 741 — $d_{1,2,Z} = D_{1,2,Z} \oplus D_{30,1,Z}$

STEP 742 — $d_{2,2,Z} = D_{2,2,Z} \oplus D_{30,1,Z}$

STEP 743 — $d_{3,2,Z} = D_{3,2,Z} \oplus D_{30,1,Z}$

STEP 744 — $d_{4,2,Z} = D_{4,2,Z} \oplus D_{30,1,Z}$

STEP 745 — $d_{5,2,Z} = D_{5,2,Z} \oplus D_{30,1,Z}$

STEP 746 — $d_{6,2,Z} = D_{6,2,Z} \oplus D_{30,1,Z}$

STEP 747 — $d_{7,2,Z} = D_{7,2,Z} \oplus D_{30,1,Z}$

STEP 748 — $d_{8,2,Z} = D_{8,2,Z} \oplus D_{30,1,Z}$

STEP 749 — $d_{9,2,Z} = D_{9,2,Z} \oplus D_{30,1,Z}$

STEP 750 — $d_{10,2,Z} = D_{10,2,Z} \oplus D_{30,1,Z}$

STEP 751 — $d_{11,2,Z} = D_{11,2,Z} \oplus D_{30,1,Z}$

STEP 752 — $d_{12,2,Z} = D_{12,2,Z} \oplus D_{30,1,Z}$

$d_{13,2,Z} = D_{13,2,Z} \oplus D_{30,1,Z}$ — STEP 753

$d_{14,2,Z} = D_{14,2,Z} \oplus D_{30,1,Z}$ — STEP 754

$d_{15,2,Z} = D_{15,2,Z} \oplus D_{30,1,Z}$ — STEP 755

$d_{16,2,Z} = D_{16,2,Z} \oplus D_{30,1,Z}$ — STEP 756

$d_{17,2,Z} = D_{17,2,Z} \oplus D_{30,1,Z}$ — STEP 757

$d_{18,2,Z} = D_{18,2,Z} \oplus D_{30,1,Z}$ — STEP 758

$d_{19,2,Z} = D_{19,2,Z} \oplus D_{30,1,Z}$ — STEP 759

$d_{20,2,Z} = D_{20,2,Z} \oplus D_{30,1,Z}$ — STEP 760

$d_{21,2,Z} = D_{21,2,Z} \oplus D_{30,1,Z}$ — STEP 761

$d_{22,2,Z} = D_{22,2,Z} \oplus D_{30,1,Z}$ — STEP 762

(F)

TO FIG. 11 continued

FROM FIG. 11 continued

(H)

$d_{23,2,Z} = D_{23,2,Z} \oplus D_{30,1,Z}$ — STEP 765

$d_{24,2,Z} = D_{24,2,Z} \oplus D_{30,1,Z}$ — STEP 766

(G)

TO FIG. 11 continued

## FIG. 11 continued

<u>740</u>

FROM FIG. 11

(F)

STEP 763

$$d_{24,2,Z} = D_{30,1,Z} \oplus d_{1,2,Z} \oplus d_{3,2,Z} \oplus d_{5,2,Z} \oplus d_{6,2,Z} \oplus d_{7,2,Z} \oplus d_{9,2,Z} \oplus d_{10,2,Z} \oplus d_{14,2,Z} \oplus d_{15,2,Z} \oplus d_{16,2,Z} \oplus d_{17,2,Z} \oplus d_{18,2,Z} \oplus d_{21,2,Z} \oplus d_{22,2,Z}$$

STEP 764

$$d_{23,2,Z} = D_{29,1,Z} \oplus d_{3,2,Z} \oplus d_{5,2,Z} \oplus d_{6,2,Z} \oplus d_{8,2,Z} \oplus d_{9,2,Z} \oplus d_{10,2,Z} \oplus d_{11,2,Z} \oplus d_{13,2,Z} \oplus d_{15,2,Z} \oplus d_{19,2,Z} \oplus d_{22,2,Z} \oplus d_{24,2,Z}$$

(H)

TO FIG. 11

FROM FIG. 11

(G)

STEP 775

$$D_{25,2,Z} = D_{29,1,Z} \oplus d_{1,2,Z} \oplus d_{2,2,Z} \oplus d_{3,2,Z} \oplus d_{5,2,Z} \oplus d_{6,2,Z} \oplus d_{10,2,Z} \oplus d_{11,2,Z} \oplus d_{12,2,Z} \oplus d_{13,2,Z} \oplus d_{14,2,Z} \oplus d_{17,2,Z} \oplus d_{18,2,Z} \oplus d_{21,2,Z} \oplus d_{23,2,Z}$$

STEP 776

$$D_{26,2,Z} = D_{30,1,Z} \oplus d_{2,2,Z} \oplus d_{3,2,Z} \oplus d_{4,2,Z} \oplus d_{6,2,Z} \oplus d_{7,2,Z} \oplus d_{11,2,Z} \oplus d_{12,2,Z} \oplus d_{13,2,Z} \oplus d_{14,2,Z} \oplus d_{15,2,Z} \oplus d_{18,2,Z} \oplus d_{19,2,Z} \oplus d_{21,2,Z} \oplus d_{24,2,Z}$$

STEP 777

$$D_{27,2,Z} = D_{29,1,Z} \oplus d_{1,2,Z} \oplus d_{3,2,Z} \oplus d_{4,2,Z} \oplus d_{5,2,Z} \oplus d_{7,2,Z} \oplus d_{8,2,Z} \oplus d_{12,2,Z} \oplus d_{13,2,Z} \oplus d_{14,2,Z} \oplus d_{15,2,Z} \oplus d_{16,2,Z} \oplus d_{19,2,Z} \oplus d_{20,2,Z} \oplus d_{22,2,Z}$$

STEP 778

$$D_{28,2,Z} = D_{30,1,Z} \oplus d_{2,2,Z} \oplus d_{4,2,Z} \oplus d_{5,2,Z} \oplus d_{6,2,Z} \oplus d_{8,2,Z} \oplus d_{9,2,Z} \oplus d_{13,2,Z} \oplus d_{14,2,Z} \oplus d_{15,2,Z} \oplus d_{16,2,Z} \oplus d_{17,2,Z} \oplus d_{20,2,Z} \oplus d_{21,2,Z} \oplus d_{23,2,Z}$$

## FIG. 12

DETERMINE TOW OF CURRENT SUBFRAME — 1010

BIT DIFFERENCE = int[ESTIMATED ACTION TIME − (TOW − 1)*(6 SECONDS/TIME UNIT)] / (20 ms/bit) — 1020

SUBFRAME DIFFERENCE = int[(BIT DIFFERENCE) / (300 BITS/SUBFRAME)] — 1030

REFERENCE BIT = BIT DIFFERENCE MODULO 300 — 1040

$Tx_{sb}$ = [(TOW − 1)+(SUBFRAME DIFFERENCE)]* (6 SECONDS/TIME UNIT)+(STARTING BIT)*(20ms/bit) — 1050

$ATsv_j$ = $Tx_{sb}$ + (PREDICTED PSEUDORANGE FOR SATELLITE 12−$j$) — 1060

## FIG. 13
### PRIOR ART

GPS SYSTEM 10

# FIG. 14

PRIOR ART

## FIG. 15

PRIOR ART

**European Patent Office**

**EUROPEAN SEARCH REPORT**

Application Number

EP 03 01 9141

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PARKINSON B W ET AL: "GLOBAL POSITIONING SYSTEM: THEORY AND APPLICATIONS" , GLOBAL POSITIONING SYSTEM: THEORY AND APPLICATIONS, PROGRESS IN ASTRONAUTICS AND AERONAUTICS VOL. 163, WASHINGTON, DC: AIAA, US, VOL. I, PAGE(S) 396-398 XP002254897 ISBN: 1-56347-106-X * Section 2. "Frame synchronisation", page 397 - page 398; figure 43 * | 1 | G01S1/04 G01S5/14 |
| A | EP 1 008 862 A (LUCENT TECHNOLOGIES INC) 14 June 2000 (2000-06-14) * abstract; figure 5 * * column 3, line 7 - line 47 * * column 7, line 24 - column 8, line 13 * * column 9, line 40 - column 10, line 17 * | 1 | |
| A | WO 99 57573 A (SNAPTRACK INC) 11 November 1999 (1999-11-11) * abstract; figures 2A,3 * * page 9 - page 12 * | 1 | |
| A | US 5 798 732 A (ESHENBACH RALPH F) 25 August 1998 (1998-08-25) * abstract; figure 2 * * column 4, line 64 - column 5, line 21 * | 1 | TECHNICAL FIELDS SEARCHED (Int.Cl.7) G01S |
| E | WO 02 12913 A (QUALCOMM INC) 14 February 2002 (2002-02-14) * page 18, paragraph 82 * * page 21, paragraph 90 * * page 24, paragraph 99 * | 1 | |

The present search report has been drawn up for all claims

| Place of search | Date of completion of the search | Examiner |
|---|---|---|
| THE HAGUE | 18 September 2003 | Niemeijer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 01 9141

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2003

| Patent document cited in search report | | | Publication date | Patent family member(s) | | Publication date |
|---|---|---|---|---|---|---|
| EP 1008862 | A | | 14-06-2000 | US | 6538600 B1 | 25-03-2003 |
| | | | | AU | 5348499 A | 20-04-2000 |
| | | | | BR | 9904452 A | 16-01-2001 |
| | | | | CN | 1255641 A | 07-06-2000 |
| | | | | DE | 69902432 D1 | 12-09-2002 |
| | | | | DE | 69902432 T2 | 28-05-2003 |
| | | | | EP | 1008862 A1 | 14-06-2000 |
| | | | | ES | 2182460 T3 | 01-03-2003 |
| | | | | JP | 2000121717 A | 28-04-2000 |
| | | | | KR | 2000029129 A | 25-05-2000 |
| WO 9957573 | A | | 11-11-1999 | AU | 4405999 A | 23-11-1999 |
| | | | | BR | 9910228 A | 22-01-2002 |
| | | | | CA | 2331721 A1 | 11-11-1999 |
| | | | | CN | 1316057 T | 03-10-2001 |
| | | | | EP | 1078275 A1 | 28-02-2001 |
| | | | | JP | 2002530627 T | 17-09-2002 |
| | | | | WO | 9957573 A1 | 11-11-1999 |
| US 5798732 | A | | 25-08-1998 | NONE | | |
| WO 0212913 | A | | 14-02-2002 | US | 2002049536 A1 | 25-04-2002 |
| | | | | AU | 8118301 A | 18-02-2002 |
| | | | | BR | 0107073 A | 25-06-2002 |
| | | | | CA | 2385191 A1 | 14-02-2002 |
| | | | | CN | 1406338 T | 26-03-2003 |
| | | | | EP | 1307762 A2 | 07-05-2003 |
| | | | | WO | 0212913 A2 | 14-02-2002 |

EPO FORM P0459

For more details about this annex : see Official Journal of the European Patent Office, No. 12/82